(19) Europäisches Patentamt
European Patent Office
Office européen des brevets

(11) **EP 3 984 626 B1**

(12) **EUROPEAN PATENT SPECIFICATION**

(45) Date of publication and mention
of the grant of the patent:
**29.11.2023 Bulletin 2023/48**

(21) Application number: **20202296.8**

(22) Date of filing: **16.10.2020**

(51) International Patent Classification (IPC):
**B01D 67/00** $^{(2006.01)}$    **B01D 69/02** $^{(2006.01)}$
**B01D 69/12** $^{(2006.01)}$    **B01D 71/02** $^{(2006.01)}$

(52) Cooperative Patent Classification (CPC):
**B01D 69/12; B01D 67/00411; B01D 67/00413;
B01D 67/0046; B01D 69/02; B01D 69/1218;
B01D 71/02; B01D 71/021; B01D 71/0215;
B01D 71/024; B01D 71/025; B01D 71/027;**
B01D 2323/12; B01D 2325/022; B01D 2325/20;

(Cont.)

(54) **CERAMIC FILTRATION ELEMENT**

KERAMISCHES FILTRIERUNGSELEMENT

ÉLÉMENT DE FILTRATION EN CÉRAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.04.2022 Bulletin 2022/16**

(73) Proprietor: **MANN+HUMMEL LIFE SCIENCES &
ENVIRONMENT HOLDING
SINGAPORE PTE. LTD.
Singapore 139234 (SG)**

(72) Inventors:
• **Ehlen, Frank
66540 Neunkirchen (DE)**

• **Gießelmann, Sabine
71638 Ludwigsburg (DE)**

(74) Representative: **Maiwald GmbH
Elisenhof
Elisenstraße 3
80335 München (DE)**

(56) References cited:
**JP-A- 2005 118 771**    **US-A1- 2005 172 811**
**US-A1- 2016 096 150**    **US-A1- 2019 202 747**

EP 3 984 626 B1

**(Cont. next page)**

(52) Cooperative Patent Classification (CPC): (Cont.)
    B01D 2325/22; B01D 2325/24; B01D 2325/30

**Description**

Technical field

The present invention relates to an inorganic ceramic filtration element for nanofiltration and ultrafiltration in liquid purification and filtration processes, and to a process for the preparation of said element.

Background

The provision of clean and drinkable water is one of the emerging problems to be solved in view of the worldwide growth of population and industrialization along with natural disasters. Water may be polluted with bacteria, viruses, protozoa and fungi, bacteriological and biological concomitants or micro plastics, pharmaceutically active chemicals, toxic chemicals, pesticides, herbicides, proteins and other pollutants which may threaten the health of humans. In addition to that, industrial wastewaters may be polluted with organic chemicals, dissolved solids or suspended material.

To reduce the amount of released pollutants and the amount of toxic wastes in an energy efficient manner, filtration elements are often used for filtration or separation purposes, i.e. in the purification of industrial wastewater. These filtration elements may comprise polymeric membranes or ceramic membranes. The latter ones are often preferred over polymeric membranes, especially in filtration or separation processes requiring harsh conditions for membrane cleaning, or involving high temperature and aggressive media, such as strongly acidic or strongly basic wastewaters, process fluids, organic solvents, and highly reactive chemicals.

US 2005/0172811 A1 discloses hydrogen permselective membranes, that are permeable membranes deposited on porous substrates, having a graded intermediate layer, that exhibit both a high hydrogen permeance and a high hydrogen perm selectivity.

US 2019/202707 A1 discloses a method of making a ceramic honeycomb article comprising a porous inorganic membrane on a porous ceramic support by applying one or more green particle coats on a green substrate, and firing the coated substrate.

JP 2005/118771 A discloses a cylindrical porous body and a method for manufacturing the same by extrusion molding.

US 2016/0096150 A1 discloses a composite oxygen ion transport membrane having a dense layer, a porous support layer, and an optional intermediate porous layer.

In general, two classes of ceramic filtration membranes are commonly used: oxide and non-oxide filtration membranes.

Non-oxide ceramic filtration membranes are usually prepared of particles such as silicon carbide (SiC), silicon nitride ($Si_3N_4$), tungsten carbide (WC), aluminum nitride (AIN) or boron nitride (BN) particles, or mixtures thereof. Membranes prepared from non-oxide ceramic particles usually have excellent properties with regard to their resistance to corrosive media and low tendency of membrane fouling due to the low isoelectric point.

Oxide ceramic filtration membranes comprise particles of metal oxides, such as aluminum oxide ($Al_2O_3$), beryllium oxide (BeO), calcium oxide (CaO), hafnium oxide ($HfO_2$), iron oxide ($FeO/Fe_2O_3$), lanthanum oxide ($La_2O_3$), magnesium oxide (MgO), manganese oxide ($MnO_2$), silicon dioxide ($SiO_2$), strontium oxide (SrO), thorium oxide ($ThO_2$), titanium dioxide ($TiO_2$), yttrium oxide ($Y_2O_3$), zirconium dioxide ($ZrO_2$), or mixtures thereof. The process of manufacture of oxide ceramic filtration membranes is usually achieved by a sol-gel process, in which a support surface is coated with a sol containing a precursor metal compound, e.g. a metal alcoholate. In the course of drying and sintering, the precursor is oxidized to the corresponding metal oxide forming membrane layers with small pore sizes.

Ceramic filtration membranes obtained by sol-gel processes have the disadvantage that they contain a high portion of amorphous phase reducing their resistance against corrosive media, i.e. acids, bases or commercially available membrane cleaners, and mechanical abrasion.

Another major problem with membrane filtrations is the decrease in permeate flux due to membrane fouling. The incidence of fouling is influenced by the nature of the solutes, their concentrations, membrane type and pore size distribution, water quality, hydrodynamics and the surface characteristics of the membrane. Membrane fouling lowers the economic efficiency of membrane filtration by reducing the quality of treated water, reduces durability, and increases the frequency of membrane cleaning.

In addition to that, particularly in the field of nanofiltration (pore size between 1 and 10 nm) and ultrafiltration (pore size of from about 10 nm to 100 nm), the integrity of the membrane is essential for the filtration performance. Defects in the membrane (such as cracks, holes or oversized pores) are generally much larger (up to several $\mu$m in diameter) than the nominal pores of the membrane which strongly influences the filtration and separation performance and downgrades the quality of the filtrate rendering the purification process inefficient.

Therefore, the provision of ceramic filtration membranes with a narrow distribution of pore size, low amount of defects and high chemical and mechanical stability is desirable to achieve the desired retention of chemicals, reduce blockage of the membrane and to enhance quality of the filtrate and enhance the concentration of the residual fluid.

## SUMMARY

The present invention relates to a composite material for purification and filtration of liquids. In one aspect, the present disclosure relates to a multilayered ceramic filtration element as set out in the appended set of claims.

In a second aspect, the present disclosure relates to a process for the preparation of a ceramic filtration element according to the first aspect, wherein the layers are formed by consecutive application of suspensions comprising particles of at least one ceramic compound of different sizes to a ceramic support structure, thereby avoiding a sol-gel process.

## BRIEF DESCRIPTION OF FIGURES

Figure 1 Comparison of sieve curves for PEGs of M1 membrane according to the present disclosure (MWCO: 2.9 kDa for polyethylene glycols (PEGs), mean pore size 3 nm membrane) with minimal defect rate and a state of the art nanofiltration membrane obtained from Inopor® (pore size: 1 nm, manufacturer information).

Figure 2 Picture of cross section of M1 membrane (MWCO: 4 kDa) according to the present disclosure (Example 1) obtained by REM with well-defined intermediate layer structure and membrane layer with minimal defect rate.

Figure 3 Picture of cross section of M1 membrane (MWCO: 4 kDa) according to the present disclosure (Example 1) obtained by REM with well-defined intermediate layer structure and membrane layer with minimal defect rate.

Figure 4 Picture of surface of membrane layer of M1 membrane (MWCO: 4 kDa) according to the present disclosure (Example 1) obtained by REM showing minimal defect rate.

Figure 5 Picture of surface of a prior-art membrane obtained from Inopor® (surface $TiO_2$, nominal pore size 1 nm) obtained by REM showing a high defect rate (cracks in the membrane surface).

## DETAILED DESCRIPTION

The present invention relates to a composite material for purification and filtration of liquids. In one aspect, the present disclosure relates to a multilayered ceramic filtration element as set out in the appended set of claims.

In the sense of the present disclosure, each intermediate layer and the membrane layer can be composed of up to 8 layers characterized in that all of the up to 8 layers have the same composition, i.e. particles of the same at least one ceramic compound and particle size. In the sense of the present disclosure, "layers" having the same composition are referred to as one layer, i.e. the up to 8 layers with the same composition forming the outermost layer are referred to as the membrane layer, for example. The use of several layers composing the intermediate layer, or the membrane layer, may have procedural reasons. For example, the final membrane layer may be prepared by several coating steps using the same composition, thereby generating "layers" of the same type directly adjacent to each other, and thus forming a single layer in the sense of the present application.

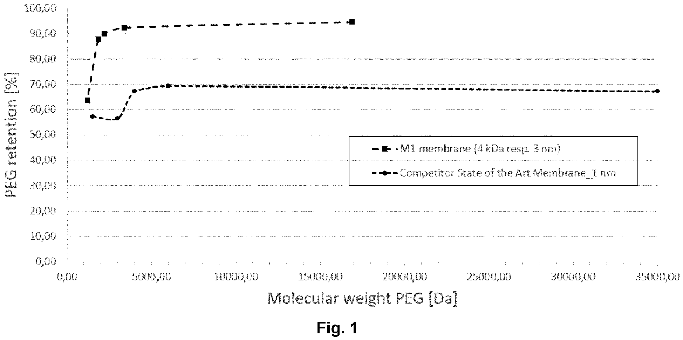

An objective of the present invention is to provide a ceramic filtration element formed on a porous support material and having satisfactory flow, high permeability of low molecular weight compounds and high retention of high molecular weight compounds, including particles of certain size. Due to the layered structure of the ceramic filtration element, the membranes of the present disclosure furthermore show a steep slope of the sieve curve (Figure 1) and a sharp molecular cut-off weight (MWCO) in combination with high fluxes enabling the provision of highly concentrated filtration residues containing molecular organic compounds. Additionally, the membranes of the present disclosure exhibit high stability against thermic, chemical and mechanical stress resulting in a superior abrasion stability and cleaning properties. After the filtration process, smooth membrane surfaces of the membranes of the present disclosure can be easily cleaned by mechanical flushing, e.g. the filtration devices can be flushed with a solvent in the opposite direction of the filtrate flow, and/or with commercially available membrane cleaners, acids or bases. In this manner, the original flow rate can be maintained over many filtration cycles without reducing the filtrate quality.

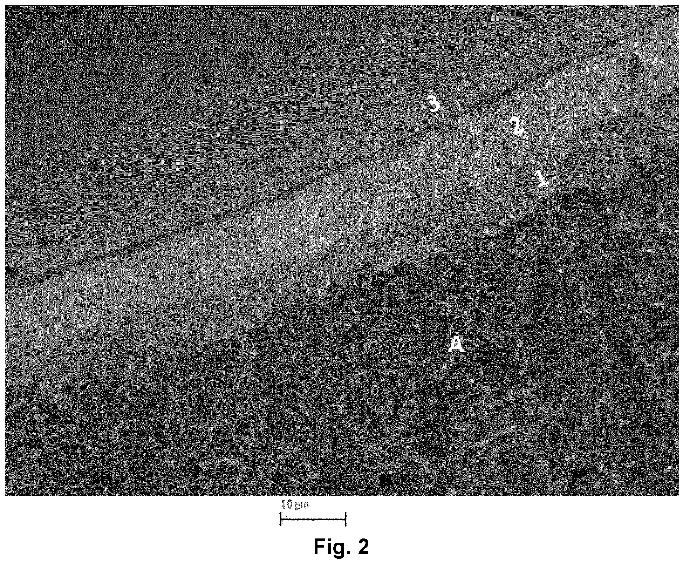

The inventors of the present disclosure have found that the properties of a ceramic filtration element, i.e. the filtration performance, flow rate and retention of chemicals, can be improved surprisingly by a concerted arrangement of support, intermediate and membrane layers. The present disclosure particularly relates to a concerted arrangement of the layers with regard to the particles of at least one ceramic compound comprised in the layers. The person skilled in the art can choose the particles in a way to form pores which have a smaller diameter in every subsequent layer. In this way, adjacent layers are formed which differ in their mean pores size by approximately 50 - 95 % allowing a continuous network of pores to form which, in turn, allows liquids to pass through the filtration element at low transmembrane pressure and generating an optimum filtration performance. In the sense of the present disclosure, the mean pore size is regarded to as the $D_{50}$ of the pore size, i.e. the size of the pores, wherein the portion of pores with diameters smaller than or equal to this value is 50 % with respect to the total number of pores. In the sense of the present disclosure, a continuous network of pores allows for an easy flow of liquids from one side of the filtration element to the other side which is driven be a pressure difference between the sides of the filtration element, i.e. the transmembrane pressure. In parallel, a smooth surface is formed which allows for the formation of layers with minimal defect rates (cf. Figures 2, 3, 4 and 5). This is highly desirable as defects may be much larger than the pore size of the filtration element and hence reduce the quality of the filtrate.

Figure 2 shows a REM photographic representation of the ceramic filtration element prepared according to Example 1, wherein A is a support structure; 1 it the first intermediate layer; 2 is the second intermediate layer; 3 shows the third intermediate layer and the membrane layer. Detector = InLens; Signal B = MPSE; Signal = 1.0000; EHT = 5.00 kV; Mag = 2.50 KX; WD = 3.3 mm; Image recorded on a Zeiss Leo 15340VP.

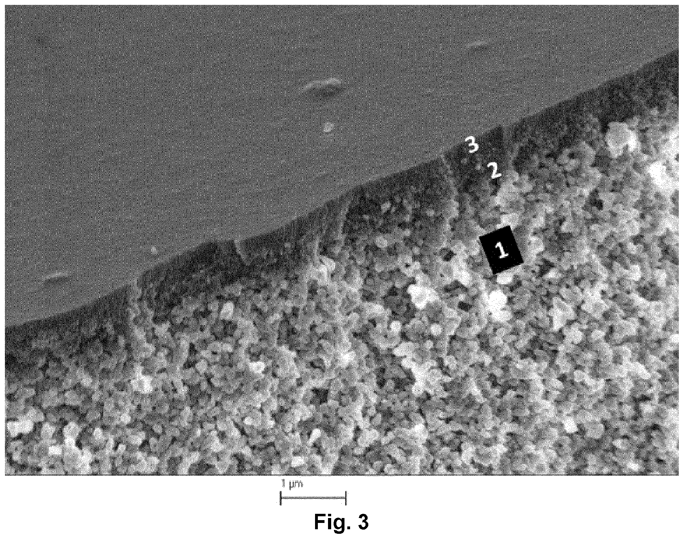

Figure 3 is a magnification of Figure 2 by factor 10. The border between the membrane layer (3) and the third intermediate layer (2) on the second intermediate layer (1) is now more clearly visible. Detector = InLens; Signal B = MPSE; Signal = 1.0000; EHT = 5.00 kV; Mag = 25.00 KX; WD = 3.3 mm; Image recorded on a Zeiss Leo 15340VP.

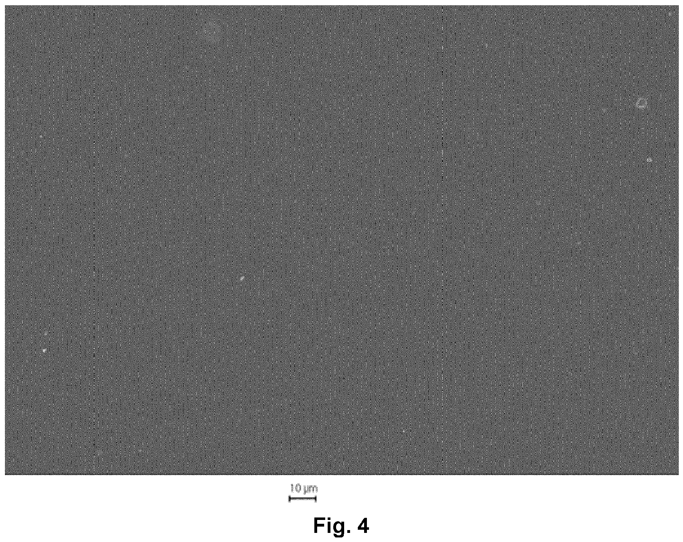

Figure 4 shows a REM photographic representation of the membrane layer of the ceramic filtration element prepared according to Example 1. The outermost surface of the filtration element, i.e. the membrane layer, shows no defects, such as holes or cracks. Detector = InLens; Signal B = MPSE; Signal = 1.0000; EHT = 5.00 kV; Mag = 1.00 KX; WD = 6.9 mm; Image recorded on a Zeiss Leo 15340VP.

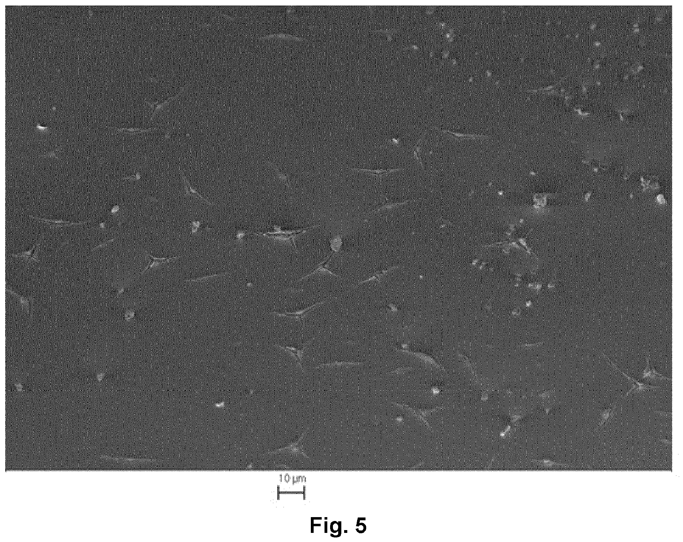

Figure 5 shows a REM photographic representation of a state of art membrane layer of a ceramic filtration element obtained from Inopor® (surface material $TiO_2$; nominal pore size 1 nm). The outermost surface of the filtration element, i.e. the membrane layer, shows a high rate of defects, e.g. cracks. Detector = InLens; Signal B = MPSE; Signal = 1.0000; EHT = 5.00 kV; Mag = 1.00 KX; WD = 6.6 mm; Image recorded on a Zeiss Leo 15340VP.

In the following, the support structure will be referred to as "support". The numbering of the intermediate layers will start with the intermediate layer directly adherent to the support, i.e. being the first intermediate layer. All additional intermediate layers are numbered consecutively depending on their position in relation to the support, i.e. the second intermediate layer is attached to, i.e., in direct contact with, the first intermediate layer and so forth.

In the sense of the present disclosure, the size of a batch of particles is characterized by its mean diameters $Q_0$, i.e. its numerical $D_{10}$, $D_{50}$ and $D_{90}$ values determined by dynamic light scattering (DLS). $D_{10}$ is defined as the diameter of the particles, wherein the portion of particles with diameters smaller than or equal to this value is 10 % with respect to the total number of particles. Thus, 10 % of the particles in the batch have a diameter smaller than or equal to the value of $D_{10}$, and 90 % of the particles have a diameter larger than the value of $D_{10}$. This is thus a number distribution of the particles. In a similar manner, $D_{50}$ is defined as the diameter of the particles, wherein the portion of particles with diameters smaller than or equal to this value is 50 % with respect to the total number of particles. Finally, $D_{90}$ is defined as the diameter of the particles, wherein the portion of particles with diameters smaller than or equal to this value is 90 % with respect to the total number of particles. In the sense of the present disclosure, all particle diameters are determined by DLS with a Nanotrac Flex nanoparticle size analyzer (obtained from Microtrac MRB).

In the sense of the present disclosure, the particles have a diameter $D_{90} \leq 1000$ nm.

The particles in each layer x of the present disclosure can be characterized by the width of their particle size distribution expressed by:

$$Z_x = \frac{D_{90} \, (\text{of particles in layer x})}{D_{10} \, (\text{of particles in layer x})}.$$

In other words, the Z-ration of layer x, i.e., $Z_x$, is the quotient of the particle size $D_{90}$ of the particles composing the layer and the particle size $D_{10}$ of the same particles composing the layer.

In the sense of the present disclosure, particles of a ceramic compound may be selected from the group consisting of particles of at least one metal oxide, particles of at least one metal carbide and particles of at least one metal nitride. Said particles of a ceramic compound may be regarded as "particles" for the present disclosure.

In the sense of the present disclosure, particles of at least one metal oxide may be selected from the group consisting of oxide ceramic materials such as aluminum oxide ($Al_2O_3$), beryllium oxide (BeO), calcium oxide (CaO), hafnium oxide ($HfO_2$), iron oxide ($FeO/Fe_2O_3$), lanthanum oxide ($La_2O_3$), magnesium oxide (MgO), manganese oxide ($MnO_2$), silicon dioxide ($SiO_2$), strontium oxide (SrO), thorium oxide ($ThO_2$), titanium dioxide ($TiO_2$), yttrium oxide ($Y_2O_3$), zirconium dioxide ($ZrO_2$) and mixtures thereof.

In preferred embodiments, the particles of the at least one metal oxide are selected from particles from the group consisting of aluminum oxide ($Al_2O_3$), silicone dioxide ($SiO_2$), titanium dioxide ($TiO_2$), zirconium dioxide ($ZrO_2$) and mixtures thereof. For all layers, independent for the layer type, the particles can be selected individually by the person skilled in the art in a way to provide a layered body having a smooth surface and low defect rate.

In the sense of the present disclosure, particles of at least one metal carbide may be selected from the group consisting of silicon carbide (SiC), tungsten carbide (WC), boron carbide (B$_4$C), and mixtures thereof.

In preferred embodiments, the particles of the at least one metal carbide are silicon carbide (SiC).

In the sense of the present disclosure, particles of at least one metal nitride may be selected from the group consisting of silicon nitride (Si$_3$N$_4$), aluminum nitride (AlN), titanium nitride (TiN), boron nitride (BN), and mixtures thereof.

In preferred embodiments, the particles of the at least one metal nitride are selected from the group consisting of silicon nitride (Si$_3$N$_4$), aluminum nitride (AlN), titanium nitride (TiN), and mixtures thereof.

In the present disclosure, the use of metal oxides as materials in the at least one intermediate layer and the membrane layer is particularly preferred over the use of metal carbides or metal nitrides.

Where the term "comprising" is used in the present disclosure and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

The support structure

According to the present disclosure, the support is formed by a porous material to allow liquids to pass through. The support is formed by a ceramic material. The mean pore size is in the range of from 0.5 μm to 1.5 μm.

For the present disclosure, it is desirable that the pore size of the support is not larger than 1.5 μm to provide a suitable surface for the coating of the intermediate layers, in particular the first intermediate layer directly adjacent to the support. If the pore size at the support surface is too large, it is more difficult to reduce the pore size by intermediate layers, in particular two or three intermediate layers, to provide a suitable surface for the coating of the membrane layer that is characterized by a low rate of defects and/or a smooth surface. In case this requirement is not met, i.e., the pore size of the support is very large, one or more support layers may be coated onto the support to achieve the desired pore size at the surface of the support. In this case, the support layers are regarded as the support structure, i.e. the support. For the present application, in particular the pore size at the surface of the support is important and influences the further layers, especially the defect rate of the further layers.

The support may have different shapes. No particular limitation is imposed on the shape of the support. Similarly, no particular limitation is imposed on the shape of the intermediate and membrane layers. For example, the support may have the shape of a disk, a polygonal plate, a plate, a flat sheet, a cylinder, a box-like cylinder, a rod, a square pillar, etc. which may be selected in respect of the purpose of use. No limitation is imposed on the dimensions of the support, intermediate or membrane layers, except for their thickness, and the dimensions may be selected in respect of the purpose of use, as long as the dimensions assure sufficient strength of the support. The person skilled in the art choses the thickness and material of the support in a way to provide the filtration element with a sufficient mechanical strength for the purpose of use.

In one embodiment, the support is a hollow fiber support structure having a mean pore size of from 0.5 μm to 1.5 μm. In the case that the pore size of the support is already in the range of the pore size of the intermediate layer arranged on the surface of the support, the purpose of the first intermediate layer is to provide a smooth surface for the subsequent process of coating of another intermediate layer.

In another embodiment, the support is a multichannel pipe structure having a mean pore size of from 1.5 μm to 12μm. In a preferred embodiment, the support is a multichannel pipe structure having a mean pore size of from 1.5 μm to 3 μm, or of from 3 μm to 4 μm, or of from 7 μm to 10 μm, or of from 10 μm to 12 μm depending on the commercial supplier. In this cases, another support layer is coated onto the support to achieve the desired mean pore size of from 0.5 μm to 1.5 μm. In this case, the support layer is regarded to as part of the support structure, i.e., the support structure encompasses the selected support element and the support layer, in short also referred to as support.

According to one embodiment of the present disclosure, an optionally coated support layer comprises or consists of particles of at least one ceramic compound.

In one embodiment, the optionally coated support layer comprises particles of at least one metal oxide selected from the group consisting of Al$_2$O$_3$, BeO, CaO, HfO$_2$, FeO, Fe$_2$O$_3$, La$_2$O$_3$, MgO, MnO$_2$, SiO$_2$, SrO, ThO$_2$, TiO$_2$, Y$_2$O$_3$, ZrO$_2$ and mixtures thereof. In another embodiment, the optionally coated support layer comprises particles of at least one metal oxide selected from the group consisting of Al$_2$O$_3$, SiO$_2$, TiO$_2$, ZrO$_2$, and mixtures thereof. In a preferred embodiment, the optionally coated support layer comprises particles of at least one metal oxide selected from the group consisting of Al$_2$O$_3$, SiO$_2$, TiO$_2$, ZrO$_2$, and mixtures thereof. In another preferred embodiment, the optionally coated support layer comprises particles of Al$_2$O$_3$.

In another preferred embodiment, the optionally coated support layer consists of particles of at least one metal oxide selected from the group consisting of Al$_2$O$_3$, BeO, CaO, HfO$_2$, FeO, Fe$_2$O$_3$, La$_2$O$_3$, MgO, MnO$_2$, SiO$_2$, SrO, ThO$_2$, TiO$_2$, Y$_2$O$_3$, ZrO$_2$ and mixtures thereof. In another preferred embodiment, the optionally coated support layer consists of particles of at least one metal oxide selected from the group consisting of Al$_2$O$_3$, SiO$_2$, TiO$_2$, ZrO$_2$, and mixtures thereof. In another preferred embodiment, the optionally coated support layer consists of particles of at least one metal oxide selected from the group consisting of $Al_2O_3$, $SiO_2$, $TiO_2$, $ZrO_2$, and mixtures thereof. In another preferred embodiment, the optionally coated support layer consists of particles of $Al_2O_3$.

In another embodiment, the optionally coated support layer comprises particles of at least one ceramic compound of metal carbides selected from the group consisting of SiC, WC, $B_4C$, and mixtures thereof. In another embodiment, the optionally coated support layer comprises particles of at least one metal carbide compound selected from the group consisting of SiC, WC, and mixtures thereof. In another preferred embodiment, the optionally coated support layer comprises particles of SiC.

In another preferred embodiment, the optionally coated support layer consists of particles of at least one metal carbide selected from the group consisting of SiC, WC, $B_4C$, and mixtures thereof. In another preferred embodiment, the optionally coated support layer consists of particles of at least one metal carbide selected from the group consisting of SiC, WC, and mixtures thereof. In another preferred embodiment, the optionally coated support layer consists of particles of SiC.

In another embodiment, the optionally coated support layer comprises particles of at least one metal nitride selected from the group consisting of $Si_3N_4$, BN, AIN, TiN, and mixtures thereof. In another embodiment, the optionally coated support layer comprises particles of at least one metal nitride compound selected from the group consisting of $Si_3N_4$, AIN, TiN, and mixtures thereof. In a preferred embodiment, the optionally coated support layer comprises particles of at least one metal nitride selected from the group consisting of AIN, TiN, and mixtures thereof. In another preferred embodiment, the optionally coated support layer comprises particles of AIN or TiN.

In another preferred embodiment, the optionally coated support layer consists of particles of at least one metal nitride selected from the group consisting of $Si_3N_4$, BN, AIN, TiN, and mixtures thereof. In another preferred embodiment, the optionally coated support layer consists of particles of at least one metal nitride selected from the group consisting of $Si_3N_4$, AIN, TiN, and mixtures thereof. In another preferred embodiment, the optionally coated support layer consists of particles of at least one metal nitride selected from the group consisting of AIN, TiN, and mixtures thereof. In another preferred embodiment, the optionally coated support layer consists of particles of AIN or TiN.

It is understood that the support structure comprises or consists of the abovementioned materials also in the absence of an optionally coated support layer.

Intermediate layer

In order to provide a layer, e.g. a membrane layer, with a low defect rate on a porous support material, the pore size of the support surface is reduced

stepwise by several intermediate layers, thereby also smoothening the surface of the support.

In one embodiment (not according to invention), one intermediate layer is coated on the support. This intermediate layer reduces the mean pore size of the surface of the support by approximately 60 - 95 %. This provides a smoother surface for the coating of the membrane layer. However, the reduction of mean pore size and smoothness of the surface of the intermediate layer may not be sufficient to achieve a membrane layer with a low defect rate because the mean pore size of the intermediate layer may still be too large, or the intermediate layer may still have a high defect rate. In another embodiment, two intermediate layers are coated on the support. The first intermediate layer in direct contact to the support may reduce the mean pore size of the surface of the support by approximately 60 - 95 %. The second intermediate layer in direct contact to the first intermediate layer may further reduce the mean pore size of the surface of the first intermediate layer by approximately 87 - 95 %. Hence, the pore size of the support is reduced in two steps.

Nevertheless, the reduction of mean pore size and improvement of smoothness of the surface of the intermediate layer may not be sufficient to achieve a membrane layer with a low defect rate, narrow pore size distribution and sharp molecular cut-off weight. Therefore, in a preferred embodiment, three intermediate layers are arranged between the support and the outermost membrane layer. Hence, the first intermediate layer in direct contact to the support may reduce the mean pore size of the surface of the support structure by approximately 60 - 95 %, the second intermediate layer in direct contact to the first intermediate layer may reduce the mean pore size the surface of the first intermediate layer by approximately 87 - 95 %, and the third intermediate layer in direct contact to the second intermediate layer may further reduce the mean pore size of the surface of the second intermediate layer by approximately 55 - 80 %. This concerted structure allows the person skilled in the art to reduce the mean pore size of the support in three steps with every subsequent layer. However, a continuous pore network can still be formed between the layers to allow liquids to pass through the filtration element from one side to the other easily not imposing the necessity of high transmembrane pressures generating a high flow of liquid. At the same time, a smooth surface on which the membrane layer can be coated is provided and a membrane layer characterized in that it shows a low rate of defects and a smooth membrane surface and hence improved filtration properties, i.e. a narrow distribution of pore size and low molecular cut-off weight, an inhibition and / or retardation of formation of fouling layer during a filtration process and improved cleaning properties due to the smooth membrane surface, can be layered upon the third intermediate layer. On the other hand, the three intermediate layers show a sufficient network of pores which allows liquids to flow from one side of the filtration element to the other side without the requirement of high transmembrane pressures. Therefore, the presence of three intermediate layers allows optimum filtration properties of the filtration element as three intermediate layers generate a smooth surface of the outermost layer while a high permeability of the filtration element allowing a high transmembrane flow at a low transmembrane pressure is maintained.

In another embodiment, four or more intermediate layers are arranged between the support and the outermost membrane layer. Hence, the concerted structure allows the person skilled in the art to reduce the mean pore size of the support in four or more steps with every subsequent layer. Although a continuous pore network can still be formed between the layers to allow liquids to pass through the filtration element from one side to the other the preparation of filtration elements with four or more intermediate layers is cost expensive and time consuming, but the filtration performance is not improved compared to filtration elements having three intermediate layers. The support, all intermediate layers and the membrane layer differ in their thickness and composition such as the chemical composition and the size of particles used in the coating. In each layer, the materials are independently selected from the group consisting of particles of at least one ceramic compound providing different properties. Particularly, the layers differ in the particle size providing different mean pore sizes across the layers.

The first intermediate layer comprises the largest particles resulting in the largest mean pore size.

The size of the particles is reduced with every consecutive intermediate layer; the membrane layer comprises the smallest particles resulting in the smallest mean pore size. The particles of the different layers are chosen in that the mean pore size of the subsequent intermediate layer is smaller than the mean pore size of the preceding layer in order to provide a smooth surface and to provide a suitable network of pores to allow liquids to pass through readily.

These materials or mixtures of these materials exhibit an advantageous strength so that the filtration element has a good pressure stability. Moreover, the ceramic material may comprise additives, preferably in the form of alkaline and/or alkaline earth oxide compounds.

The particles of the at least one ceramic compound are selected individually for each layer with respect to both their chemical composition and particle size. In preferred embodiments, a careful selection and matching of the particles of the at least one ceramic compound generates the optimal properties with regard to the mean pore size, smoothness of the surface and continuous network of pores. A concerted selection of particles of the at least one ceramic compound with respect to the inherent properties of mean pore size, porosity and microstructure in the respective layers generates an optimized layered ceramic filtration element.

Another aspect of the invention concerns the thickness of the individual intermediate layers x and the membrane layer m. Thereby, the thickness of each of the layers is adapted to the adherent layers to generate a concerted organization of the membrane filtration device. In preferred embodiments, the first intermediate layer has the largest thickness and the thickness of each layer is reduced with each subsequent layer.

In the sense of the present disclosure, the ratio of thicknesses between two layers $T_{x/x+1}$, for the purposes of the present disclosure, is characterized by the equation:

$$T_{x/x+1} = \frac{\text{thickness t (of layer x)}}{\text{thickness t (of layer x+1)}}.$$

Furthermore, for each layer, the ratio $Y_x$ of the thickness of the respective layer x, i.e. $t_x$, and the particle size $D_{50}$ of the respective ceramic nanoparticles in the same layer x, is calculated as

$$Y_x = \frac{\text{thickness t (of layer x)}}{D_{50} \text{ (of particles in layer x)}}.$$

The mean pore size of the layers is determined either by capillary flow porometry, by molecular weight cut-off (MWCO) analysis or by $N_2$ adsorption experiments using the common method established by Barret, Joyne and Halenda. In the sense of the present disclosure, the mean pore size is defined as the $D_{50}$ diameter of the pores, wherein the portion of pores with diameters smaller than this value is 50 % with respect to the total number of pores.

According to one embodiment of the present disclosure, an at least one intermediate layer comprises or consists of particles of at least one ceramic compound.

According to another embodiment, the at least one ceramic compound of the at least one intermediate layer is selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AIN, WC, $B_4C$, TiN, and mixtures thereof, preferably selected from the group consisting of $Al_2O_3$, $SiO_2$, $TiO_2$, $ZrO_2$, SiC, $Si_3N_4$, AIN, TiN, and mixtures thereof, more preferably wherein the at least one ceramic compound is $Al_2O_3$, $TiO_2$ or $ZrO_2$, SiC, TiN, or a mixture thereof, most preferably wherein the at least one ceramic compound is SiC or $Al_2O_3$.

According to one embodiment of the present disclosure, the first intermediate layer comprises particles of the at least one metal oxide selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$ and mixtures thereof. In another embodiment, the first intermediate layer comprises particles of the at least one metal oxide selected from the group consisting of $Al_2O_3$, $SiO_2$, $TiO_2$, $ZrO_2$, and mixtures thereof.

According to a preferred embodiment, the at least one intermediate layer consists of particles of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$ or mixtures thereof. In another preferred embodiment, the at least one intermediate layer consists of particles of $Al_2O_3$, $SiO_2$, $TiO_2$, $ZrO_2$ or mixtures thereof. In another preferred embodiment, the at least one intermediate layer consists of particles of $Al_2O_3$ or $TiO_2$. In another preferred embodiment, the at least one intermediate layer consists of particles of $Al_2O_3$.

In another embodiment, the at least one intermediate layer comprises particles of at least one metal carbide selected from the group consisting of SiC, WC, $B_4C$, and mixtures thereof. In another embodiment, the at least one intermediate layer comprises particles of at least one metal carbide compound selected from the group consisting of SiC, WC, and mixtures thereof. In another preferred embodiment, the at least one intermediate layer comprises particles of SiC.

In another preferred embodiment, the at least one intermediate layer consists of particles of at least one metal carbide selected from the group consisting of SiC, WC, $B_4C$, and mixtures thereof. In another preferred embodiment, the at least one intermediate layer consists of particles of at least one metal carbide selected from the group consisting of SiC, WC, and mixtures thereof. In another preferred embodiment, the at least one intermediate layer consists of particles of SiC.

In another embodiment, the at least one intermediate layer comprises particles of at least one metal nitride selected from the group consisting of $Si_3N_4$, BN, AIN, TiN, and mixtures thereof. In another embodiment, the at least one intermediate layer comprises particles of at least one metal nitride compound selected from the group consisting of $Si_3N_4$, AIN, TiN, and mixtures thereof. In a preferred embodiment, the at least one intermediate layer comprises particles of at least one metal nitride selected from the group consisting of AIN, TiN, and mixtures thereof. In another preferred embodiment, the at least one intermediate layer comprises particles of AIN or TiN.

In another preferred embodiment, the at least one intermediate layer consists of particles of at least one metal nitride selected from the group consisting of $Si_3N_4$, BN, AIN, TiN, and mixtures thereof. In another preferred embodiment, the at least one intermediate layer consists of particles of at least one metal nitride selected from the group consisting of $Si_3N_4$, AIN, TiN, and mixtures thereof. In another preferred embodiment, the at least one intermediate layer consists of particles of at least one metal nitride selected from the group consisting of AIN, TiN, and mixtures thereof. In another preferred embodiment, the at least one intermediate layer consists of particles of AIN or TiN.

In the sense of the present disclosure, the first intermediate layer is arranged between the support and the second intermediate layer in a sandwich manner wherein the support has a mean pore size of from 0.5 $\mu$m to 1.5 $\mu$m determined by capillary flow porometry. Where the mean pore size is larger than the specified range, another support layer is coated on top of the original support. For the first intermediate layer, particles of the at least one ceramic compound with a particle size distribution of $Z \leq 4$ are used.

In an embodiment, the at least one intermediate layer comprises particles with a particle size of $D_{10}$ in the range of from 70 to 250 nm, preferably of from 100 to 180 nm, and further preferably $D_{90}$ in the range of from 200 to 500 nm, more preferably of from 250 to 400 nm.

The ratio between the thickness of the first intermediate layer and the particle size of the particles in the first intermediate layer $Y_1$ may be chosen in the range of from 18.5 to 313 (i.e., the thickness is of from 5 to 50 $\mu$m). The mean pore size is from 110 to 170 nm determined by capillary flow porometry.

According to one embodiment of the present disclosure, a second intermediate layer, if present, comprises or consists of particles of at least one ceramic compound.

According to another embodiment, the at least one ceramic compound of the second intermediate layer is selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AIN, WC, $B_4C$, TiN, and mixtures thereof, preferably selected from $Al_2O_3$, $SiO_2$, $TiO_2$, $ZrO_2$, SiC, $Si_3N_4$, AIN, TiN, and mixtures thereof, more preferably wherein the at least one ceramic compound is $Al_2O_3$, $TiO_2$ or $ZrO_2$, SiC, TiN, or a mixture thereof, most preferably wherein the at least one ceramic compound is SiC or $Al_2O_3$.

According to another embodiment of the present disclosure, the second intermediate layer comprises particles of at least one metal oxide selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$ and mixtures thereof. In another embodiment, the second intermediate layer comprises nanoparticles of at least one metal oxide selected from the group consisting of $Al_2O_3$, $SiO_2$, $TiO_2$, $ZrO_2$ and mixtures thereof. In another embodiment, the second intermediate layer comprises nanoparticles of at least one metal oxide selected from the group consisting of $Al_2O_3$, $TiO_2$ and $ZrO_2$.

According to a preferred embodiment, the second intermediate layer consists of particles of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$ or mixtures thereof. In another preferred embodiment, the second intermediate layer consists of particles of $Al_2O_3$, $SiO_2$, $TiO_2$, $ZrO_2$ or mixtures thereof. In another preferred embodiment, the second intermediate layer consists of particles of $Al_2O_3$ or $TiO_2$. In another preferred embodiment, the second intermediate layer consists of particles of $Al_2O_3$.

In another embodiment, the second intermediate layer comprises particles of at least one metal carbide selected from the group consisting of SiC, WC, $B_4C$, and mixtures thereof. In another embodiment, the second intermediate layer comprises particles of at least one metal carbide compound selected from the group consisting of SiC, WC, and mixtures thereof. In another preferred embodiment, the second intermediate layer comprises particles of SiC.

In another preferred embodiment, the second intermediate layer consists of particles of at least one metal carbide selected from the group consisting of SiC, WC, $B_4C$, and mixtures thereof. In another preferred embodiment, the second intermediate layer consists of particles of at least one metal carbide selected from the group consisting of SiC, WC, and mixtures thereof. In another preferred embodiment, the second intermediate layer consists of particles of SiC.

In another embodiment, the second intermediate layer comprises particles of at least one metal nitride selected from the group consisting of $Si_3N_4$, BN, AIN, TiN, and mixtures thereof. In another embodiment, the second intermediate layer comprises particles of at least one metal nitride compound selected from the group consisting of $Si_3N_4$, AIN, TiN, and mixtures thereof. In a preferred embodiment, the second intermediate layer comprises particles of at least one metal nitride selected from the group consisting of AIN, TiN, and mixtures thereof. In another preferred embodiment, the second intermediate layer comprises particles of AIN or TiN.

In another preferred embodiment, the second intermediate layer consists of particles of at least one metal nitride selected from the group consisting of $Si_3N_4$, BN, AIN, TiN, and mixtures thereof. In another preferred embodiment, the second intermediate layer consists of particles of at least one metal nitride selected from the group consisting of $Si_3N_4$, AIN, TiN, and mixtures thereof. In another preferred embodiment, the second intermediate layer consists of particles of at least one metal nitride selected from the group consisting of AIN, TiN, and mixtures thereof. In another preferred embodiment, the second intermediate layer consists of particles of AIN or TiN.

Thereby, the second intermediate layer is arranged between the first and the third intermediate layer or the membrane layer in a sandwich manner. For the second intermediate layer, particles of the at least one ceramic compound with a particle size distribution of $Z \leq 2.7$ may be used. In another embodiment, the second intermediate layer comprises particles with a Z-ratio $D_{90}/D_{10}$ of up to 3, preferably wherein the particle size $D_{10}$ is in the range of from 50 to 170 nm, preferably of from 80 to 120 nm, and further preferably $D_{90}$ is in the range of from 150 to 350 nm, more preferably of from 180 to 210 nm. The ratio between the thickness of the second intermediate layer and the particle size of the particles in the second intermediate layer Y may be chosen in the range of from 6 to 250 (i.e., the thickness may be of from 1 to 30 $\mu$m). One or more of these layers may be layered on top of each other.

According to one embodiment of the present disclosure, a third or further intermediate layer, if present, comprises or consists of particles of at least one ceramic compound.

According to another embodiment, the at least one ceramic compound of the third or further intermediate layer, if present, is selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AIN, WC, $B_4C$, TiN, and mixtures thereof, preferably selected from $Al_2O_3$, $SiO_2$, $TiO_2$, $ZrO_2$, SiC, $Si_3N_4$, AIN, TiN, and mixtures thereof, more preferably wherein the at least one ceramic compound is $Al_2O_3$, $TiO_2$ or $ZrO_2$, SiC, TiN, or a mixture thereof, most preferably wherein the at least one ceramic compound is $Al_2O_3$ or $TiO_2$.

According to another embodiment of the present disclosure, a third or further intermediate layer comprises particles of the at least one metal oxide selected from the group consisting of $Al_2O_3$, BeO, CaO, $HfO_2$, FeO, $Fe_3O_3$, $La_2O_3$, MgO, $MnO_2$, $SiO_2$, SrO, $ThO_2$, $TiO_2$, $Y_2O_3$, $ZrO_2$ and mixtures thereof. In another embodiment, the third or further intermediate layer comprises particles of the at least one metal oxide selected from the group consisting of $Al_2O_3$, $SiO_2$, $TiO_2$, $ZrO_2$ and mixtures thereof.

According to a preferred embodiment, the third or further intermediate layer consists of particles of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$ or mixtures thereof. In another preferred embodiment, the third or further intermediate layer consists of particles of $Al_2O_3$, $SiO_2$, $TiO_2$, $ZrO_2$ or mixtures thereof. According to another preferred embodiment, the third or further intermediate layer consists of particles of $Al_2O_3$ or $TiO_2$. In another preferred embodiment, the third or further intermediate layer consists of particles of $Al_2O_3$, $SiO_2$, $TiO_2$, $ZrO_2$ or mixtures thereof. According to another preferred embodiment, the third or further intermediate layer consists of particles of $TiO_2$.

In another embodiment, the third or further intermediate layer comprises particles of at least one metal carbide selected from the group consisting of SiC, WC, $B_4C$, and mixtures thereof. In another embodiment, the third or further intermediate layer comprises particles of at least one metal carbide compound selected from the group consisting of SiC, WC, and mixtures thereof. In another preferred embodiment, the third or further intermediate layer comprises particles of SiC.

In another preferred embodiment, the third or further intermediate layer consists of particles of at least one metal carbide selected from the group consisting of SiC, WC, $B_4C$, and mixtures thereof. In another preferred embodiment, the third or further intermediate layer consists of particles of at least one metal carbide selected from the group consisting of SiC, WC, and mixtures thereof. In another preferred embodiment, the third or further intermediate layer consists of particles of SiC.

In another embodiment, the third or further intermediate layer comprises particles of at least one metal nitride selected from the group consisting of $Si_3N_4$, BN, AlN, TiN, and mixtures thereof. In another embodiment, the third or further intermediate layer comprises particles of at least one metal nitride compound selected from the group consisting of $Si_3N_4$, AlN, TiN, and mixtures thereof. In a preferred embodiment, the third or further intermediate layer comprises particles of at least one metal nitride selected from the group consisting of AlN, TiN, and mixtures thereof. In another preferred embodiment, the third or further intermediate layer comprises particles of AlN or TiN.

In another preferred embodiment, the third or further intermediate layer consists of particles of at least one metal nitride selected from the group consisting of $Si_3N_4$, BN, AlN, TiN, and mixtures thereof. In another preferred embodiment, the third or further intermediate layer consists of particles of at least one metal nitride selected from the group consisting of $Si_3N_4$, AlN, TiN, and mixtures thereof. In another preferred embodiment, the third or further intermediate layer consists of particles of at least one metal nitride selected from the group consisting of AlN, TiN, and mixtures thereof. In another preferred embodiment, the third or further intermediate layer consists of particles of AlN or TiN.

The third or further intermediate layer is arranged between the preceding intermediate layer (e.g. the second intermediate layer) and the membrane layer in a sandwich manner. For the third or further intermediate layer, particles of the at least one ceramic compound with a particle distribution of $Z \leq 6$ may be used. In another embodiment, the third or further intermediate layer, if present, comprises particles with a Z-ratio $D_{90}/D_{10}$ of up to 6, preferably up to 3, more preferably wherein the particle size $D_{10}$ is in the range of from 8 to 25 nm, preferably of from 12 to 17 nm, and further preferably $D_{90}$ is in the range of from 18 to 50 nm, more preferably of from 25 to 35 nm. The ratio between the thickness of the third intermediate layer and the particle size of the particles in the third intermediate layer Y may be chosen in the range of from 9 to 176 (i.e., the thickness of the third or further intermediate layer may be chosen in the range of from 0.2 to 3 $\mu$m).

### The membrane layer

According to the present disclosure, a membrane layer is arranged in direct contact to the third or further intermediate layer, i.e. the membrane layer is the outermost layer.

In one embodiment, the at least one ceramic compound of the membrane layer is selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AlN, WC, $B_4C$, TiN, and mixtures thereof, preferably selected from $Al_2O_3$, $SiO_2$, $TiO_2$, $ZrO_2$, SiC, $Si_3N_4$, AlN, TiN, and mixtures thereof, more preferably wherein the at least one ceramic compound is $Al_2O_3$, $TiO_2$ or $ZrO_2$, SiC, TiN, or a mixture thereof, most preferably wherein the at least one ceramic compound is $Al_2O_3$, $TiO_2$ or $ZrO_2$.

In one embodiment, the membrane layer comprises or consists of particles of at least one ceramic compound. In one embodiment, the membrane layer comprises particles of at least one metal oxide selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$ and mixtures thereof. In another embodiment, the membrane layer comprises particles of the at least one metal oxide selected from the group consisting of $Al_2O_3$, $SiO_2$, $TiO_2$, $ZrO_2$ and mixtures thereof. In another embodiment, the membrane layer comprises particles of the at least one metal oxide selected from the group consisting of $TiO_2$, $ZrO_2$ and mixtures thereof. In another embodiment, the membrane layer comprises particles of the at least one metal oxide selected from the group consisting $TiO_2$ and $ZrO_2$.

In a preferred embodiment, the membrane layer consists of particles of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$ or mixtures thereof. In another preferred embodiment, the membrane layer consists of particles of $Al_2O_3$, $SiO_2$, $TiO_2$, $ZrO_2$ or mixtures thereof. In another preferred embodiment, the membrane layer consists of particles of $TiO_2$, $ZrO_2$ or mixtures thereof. In another preferred embodiment, the membrane layer consists of particles of $TiO_2$ or $ZrO_2$.

In another embodiment, the membrane layer comprises particles of at least one metal carbide selected from the group consisting of SiC, WC, $B_4C$, and mixtures thereof. In another embodiment, the membrane layer comprises particles of at least one metal carbide compound selected from the group consisting of SiC, WC, and mixtures thereof. In another preferred embodiment, the membrane layer comprises particles of SiC.

In another preferred embodiment, the membrane layer consists of particles of at least one metal carbide selected from the group consisting of SiC, WC, $B_4C$, and mixtures thereof. In another preferred embodiment, the membrane layer consists of particles of at least one metal carbide selected from the group consisting of SiC, WC, and mixtures thereof. In another preferred embodiment, the membrane layer consists of particles of SiC.

In another embodiment, the membrane layer comprises particles of at least one metal nitride selected from the group consisting of $Si_3N_4$, BN, AlN, TiN, and mixtures thereof. In another embodiment, the membrane layer comprises particles of at least one metal nitride compound selected from the group consisting of $Si_3N_4$, AlN, TiN, and mixtures

thereof. In a preferred embodiment, the membrane layer comprises particles of at least one metal nitride selected from the group consisting of AlN, TiN, and mixtures thereof. In another preferred embodiment, the membrane layer comprises particles of AlN or TiN.

In another preferred embodiment, the membrane layer consists of particles of at least one metal nitride selected from the group consisting of $Si_3N_4$, BN, AlN, TiN, and mixtures thereof. In another preferred embodiment, the membrane layer consists of particles of at least one metal nitride selected from the group consisting of $Si_3N_4$, AlN, TiN, and mixtures thereof. In another preferred embodiment, the membrane layer consists of particles of at least one metal nitride selected from the group consisting of AlN, TiN, and mixtures thereof. In another preferred embodiment, the membrane layer consists of particles of AlN or TiN.

In preferred embodiments, the particles of the at least one ceramic compound are selected from $TiO_2$ or $ZrO_2$ with a particle size distribution of $Z \leq 15$ (e.g., mean particle size of $D_{10}$ = 1 - 9 nm, $D_{50}$ = 2 - 10 nm, $D_{90}$ = 3 - 15 nm (DLS)). The thickness of the membrane layer may be chosen in the range of from 10 - 800 nm.

In another embodiment, the membrane layer consists of $TiO_2$ particles with a Z-ratio $D_{90}/D_{10}$ of less than 3, preferably wherein the particles size $D_{10}$ is in the range of from 5 to 9 nm, and further preferably $D_{90}$ is in the range of from 9 to 15 nm.

In still another embodiment, the membrane layer consists of $ZrO_2$ particles with a Z-ratio $D_{90}/D_{10}$ of less than 5, preferably wherein the particle size $D_{10}$ is in the range of from 1 to 3 nm, and further preferably $D_{90}$ is in the range of from 3 to 5 nm.

## The arrangement of layers

In a preferred embodiment, the layered body comprises a support, three intermediate layers and a membrane layer.

In a preferred embodiment, the first intermediate layer consists of particles of $Al_2O_3$, the second intermediate layer consists of particles of $Al_2O_3$ and the third intermediate layer consists of particles of $Al_2O_3$.

In another preferred embodiment, the first intermediate layer consists of particles of $Al_2O_3$, the second intermediate layer consists of particles of $Al_2O_3$ and the third intermediate layer consists of particles of $TiO_2$.

In another preferred embodiment, the first intermediate layer consists of particles of $Al_2O_3$, the second intermediate layer consists of particles of $Al_2O_3$ and the third intermediate layer consists of particles of $ZrO_2$.

In another preferred embodiment, the first intermediate layer consists of particles of $Al_2O_3$, the second intermediate layer consists of particles of $ZrO_2$ and the third intermediate layer consists of particles of $Al_2O_3$.

In another preferred embodiment, the first intermediate layer consists of particles of $Al_2O_3$, the second intermediate layer consists of particles of $TiO_2$ and the third intermediate layer consists of particles of $Al_2O_3$.

In another preferred embodiment, the first intermediate layer consists of particles of $Al_2O_3$, the second intermediate layer consists of particles of $TiO_2$ and the third intermediate layer consists of particles of $TiO_2$.

In another preferred embodiment, the first intermediate layer consists of particles of $Al_2O_3$, the second intermediate layer consists of particles of $TiO_2$ and the third intermediate layer consists of particles of $ZrO_2$.

In another preferred embodiment, the first intermediate layer consists of particles of $Al_2O_3$, the second intermediate layer consists of particles of $ZrO_2$ and the third intermediate layer consists of particles of $ZrO_2$.

In another preferred embodiment, the first intermediate layer consists of particles of $Al_2O_3$, the second intermediate layer consists of particles of $ZrO_2$ and the third intermediate layer consists of particles of $TiO_2$.

In another preferred embodiment, the first intermediate layer consists of particles of $TiO_2$, the second intermediate layer consists of particles of $Al_2O_3$ and the third intermediate layer consists of particles of $Al_2O_3$.

In another preferred embodiment, the first intermediate layer consists of particles of $TiO_2$, the second intermediate layer consists of particles of $Al_2O_3$ and the third intermediate layer consists of particles of $TiO_2$.

In another preferred embodiment, the first intermediate layer consists of particles of $TiO_2$, the second intermediate layer consists of particles of $Al_2O_3$ and the third intermediate layer consists of particles of $ZrO_2$.

In another preferred embodiment, the first intermediate layer consists of particles of $TiO_2$, the second intermediate layer consists of particles of $ZrO_2$ and the third intermediate layer consists of particles of $Al_2O_3$.

In another preferred embodiment, the first intermediate layer consists of particles of $TiO_2$, the second intermediate layer consists of particles of $TiO_2$ and the third intermediate layer consists of particles of $Al_2O_3$.

In another preferred embodiment, the first intermediate layer consists of particles of $TiO_2$, the second intermediate layer consists of particles of $TiO_2$ and the third intermediate layer consists of particles of $TiO_2$.

In another preferred embodiment, the first intermediate layer consists of particles of $TiO_2$, the second intermediate layer consists of particles of $TiO_2$ and the third intermediate layer consists of particles of $ZrO_2$.

In another preferred embodiment, the first intermediate layer consists of particles of $TiO_2$, the second intermediate layer consists of particles of $ZrO_2$ and the third intermediate layer consists of particles of $ZrO_2$.

In another preferred embodiment, the first intermediate layer consists of particles of $TiO_2$, the second interme-

diate layer consists of particles of $ZrO_2$ and the third intermediate layer consists of particles of $TiO_2$.

In another preferred embodiment, the first intermediate layer consists of particles of $ZrO_2$, the second intermediate layer consists of particles of $Al_2O_3$ and the third intermediate layer consists of particles of $Al_2O_3$.

In another preferred embodiment, the first intermediate layer consists of particles of $ZrO_2$, the second intermediate layer consists of particles of $Al_2O_3$ and the third intermediate layer consists of particles of $TiO_2$.

In another preferred embodiment, the first intermediate layer consists of particles of $ZrO_2$, the second intermediate layer consists of particles of $Al_2O_3$ and the third intermediate layer consists of particles of $ZrO_2$.

In another preferred embodiment, the first intermediate layer consists of particles of $ZrO_2$, the second intermediate layer consists of particles of $ZrO_2$ and the third intermediate layer consists of particles of $Al_2O_3$.

In another preferred embodiment, the first intermediate layer consists of particles of $ZrO_2$, the second intermediate layer consists of particles of $TiO_2$ and the third intermediate layer consists of particles of $Al_2O_3$.

In another preferred embodiment, the first intermediate layer consists of particles of $ZrO_2$, the second intermediate layer consists of particles of $TiO_2$ and the third intermediate layer consists of particles of $TiO_2$.

In another preferred embodiment, the first intermediate layer consists of particles of $ZrO_2$, the second intermediate layer consists of particles of $TiO_2$ and the third intermediate layer consists of particles of $ZrO_2$.

In another preferred embodiment, the first intermediate layer consists of particles of $ZrO_2$, the second intermediate layer consists of particles of $ZrO_2$ and the third intermediate layer consists of particles of $ZrO_2$.

In another preferred embodiment, the first intermediate layer consists of particles of $ZrO_2$, the second intermediate layer consists of particles of $ZrO_2$ and the third intermediate layer consists of particles of $TiO_2$.

In another preferred embodiment, the first intermediate layer consists of particles of $ZrO_2$, the second intermediate layer consists of particles of $ZrO_2$ and the third intermediate layer consists of particles of SiC.

In another preferred embodiment, the first intermediate layer consists of particles of $ZrO_2$, the second intermediate layer consists of particles of SiC and the third intermediate layer consists of particles of SiC.

In another preferred embodiment, the first intermediate layer consists of particles of SiC, the second intermediate layer consists of particles of SiC and the third intermediate layer consists of particles of SiC.

In another preferred embodiment, the first intermediate layer consists of particles of $TiO_2$, the second intermediate layer consists of particles of $TiO_2$ and the third intermediate layer consists of particles of SiC.

In another preferred embodiment, the first intermediate layer consists of particles of $TiO_2$, the second intermediate layer consists of particles of SiC and the third intermediate layer consists of particles of SiC.

In another preferred embodiment, the first intermediate layer consists of particles of $Al_2O_3$, the second intermediate layer consists of particles of SiC and the third intermediate layer consists of particles of SiC.

In another preferred embodiment, the first intermediate layer consists of particles of $Al_2O_3$, the second intermediate layer consists of particles of $Al_2O_3$, and the third intermediate layer consists of particles of SiC.

It is understood that the skilled person can combine any one of the combinations with any one of the materials disclosed herein suitable to form the membrane layer.

In another preferred embodiment, the layered body comprises a support, three intermediate layers and a membrane layer. Thereby, the first intermediate layer consists of particles with a mean particle size of $D_{10}$ = 100 - 180 nm, $D_{50}$ = 160 - 270 nm, $D_{90}$ = 250 - 400 nm (DLS), has a thickness of 5 to 50 $\mu$m and a mean pore size of 110 to 170 nm. The second intermediate layer consists of particles with a mean particle size of $D_{10}$ = 80 - 120 nm, $D_{50}$ = 120 - 160 nm, $D_{90}$ = 180 - 210 nm (DLS), has a thickness of 1 to 30 $\mu$m and a mean pore size of $D_{50}$ = 9 - 14 nm. The third intermediate layer consists of particles with a mean particle size of $D_{10}$ = 12 - 17 nm, $D_{50}$ = 17 - 22 nm, $D_{90}$ = 25 - 35 nm (DLS) and has a thickness of 0.2 to 3 $\mu$m. The membrane layer consists of particles with a mean particle size of $D_{10}$ = 5 - 9 nm, $D_{50}$ = 6 - 10 nm, $D_{90}$ = 9 - 15 nm (DLS), has a thickness of 40 - 800 nm and a mean pore size of 0.8 - 1.5 nm determined by filtration of a mixture comprising dextranes. After detection of the dextranes in the filtrate, the mean pore size was calculated (PSS WinGPC Unity, build 9350, GLC; obtained from PSS GmbH) using the empirical relation of Granath and Kvist (1967) for the correlation of molecular weight of the retained dextranes with the pore size of the filtration element.

In another preferred embodiment, the layered body comprises a support, three intermediate layers and a membrane layer. Thereby, the first intermediate layer consists particles with a mean particle size of $D_{10}$ = 100 - 180 nm, $D_{50}$ = 160 - 270 nm, $D_{90}$ = 250 - 400 nm (DLS), has a thickness of 5 - 50 $\mu$m and a mean pore size of 110 to 170 nm. The second intermediate layer consists of particles with a mean particle size of $D_{10}$ = 80 - 120 nm, $D_{50}$ = 120 - 160 nm, $D_{90}$ = 180 - 210 nm (DLS), has a thickness of 1 - 30 $\mu$m and a pore size of D50 = 9 - 14 nm. The third intermediate layer consists of particles with a mean particle size of $D_{10}$ = 12 - 17 nm, $D_{50}$ = 17 - 22 nm, $D_{90}$ = 25 - 35 nm (DLS) and has a thickness of 0.2 - 3 $\mu$m. The membrane layer consists of particles with a mean particle size of $D_{10}$ = 1 - 3 nm, $D_{50}$ = 2 - 4 nm, $D_{90}$ = 3 - 7 nm (DLS), has a thickness of from 10 - 150 nm and a mean pore size of ~ 0.6 nm (determined with $N_2$ adsorption experiments and evaluation using the BJH method; equipment obtained from ThermoFisher Scientific).

The present disclosure also relates to a concerted arrangement of the layers with regard to their thicknesses. In one embodiment, the ratio of thickness between the first and second intermediate layer is at least $T_{1/2}$ = 0.15. In another embodiment, the ratio of thickness between the first and the second intermediate layer is less than $T_{1/2}$ = 50. In a preferred embodiment, the ratio of thickness between the first and the second intermediate layer is in the range of from $T_{1/2}$ = 0.15 to $T_{1/2}$ = 50. In another preferred embodiment, the ratio of thickness between the first and the second intermediate layer is in the range of from $T_{1/2}$ = 1 to $T_{1/2}$ = 50. In another preferred embodiment, the ratio of thickness between the first and the second intermediate layer is in the range of from $T_{1/2}$ = 1.5 to $T_{1/2}$ = 10.

In one embodiment, the ratio of thickness between the second and third intermediate layer is at least $T_{2/3}$ = 0.3. In another embodiment, the ratio of thickness between the second and the third intermediate layer is less than $T_{2/3}$ = 150. In a preferred embodiment, the ratio of thickness between the second and the third intermediate layer is in the range of from $T_{2/3}$ = 0.3 to $T_{2/3}$ = 150. In another preferred embodiment, the ratio of thickness between the second and the third intermediate layer is in the range of from $T_{2/3}$ = 1 to $T_{2/3}$ = 150. In another preferred embodiment, the ratio of thickness between the second and the third intermediate layer is in the range of from $T_{2/3}$ = 5 to $T_{2/3}$ = 20.

In one embodiment, the ratio of thickness between the third intermediate layer and the membrane layer is at least $T_{3/m}$ = 0.25. In another embodiment, the ratio of thickness between the third intermediate layer and the membrane layer is less than $T_{3/m}$ = 300. In a preferred embodiment, the ratio of thickness the third intermediate layer and the membrane layer is in the range of from $T_{3/m}$ = 0.25 to $T_{3/m}$ = 300. In another preferred embodiment, the ratio of thickness the third intermediate layer and the membrane layer is in the range of from $T_{3/m}$ = 1 to $T_{3/m}$ = 300. In another preferred embodiment, the ratio of thickness the third intermediate layer and the membrane layer is in the range of from $T_{3/m}$ = 2 to $T_{3/m}$ = 20.

The ceramic filtration elements disclosed herein have a narrow pore size distribution, minimal defect rates in the smooth surface and a good stability against high temperatures and corrosive chemicals over a broad pH range of from 1 to 14. The low rate of defects in the layers, furthermore, results in the reduction of blockages inside the filtration element caused by large compounds and/or particles entering through defects and cracks so that a high permeability of solvent and low molecular weight chemicals, i.e. salts, at a high tangential flux or in dead-end filtration processes can be maintained over many filtration cycles. Hence, the ceramic filtration elements are highly durable and may find various applications in industrial separation and filtration processes. The processing, purification and recycling of industrial wastewaters that are generated during reaction or purification steps in chemical or pharmaceutical industry and their process fluids is thus rendered more efficient by the disclosed ceramic filtration elements.

Process of manufacture of filtration elements

The present disclosure furthermore relates to a method for the production of the ceramic filtration elements described above. Accordingly, a second aspect of the present disclosure relates to a process for manufacturing a multilayer ceramic filtration element according to the first aspect as detailed above, wherein the layers are formed by consecutive application of suspensions comprising particles of at least one ceramic compound of different sizes to a ceramic support structure, thereby avoiding a sol-gel process.

An advantage of the process for the manufacturing of a ceramic filtration element according to the present disclosure is the use of process steps which avoid the sol-gel process. The sol-gel process may require higher temperatures and/or drying steps which, in turn, may induce voids and cracks to the layers.

The process for the preparation of each layer comprises the following steps (A) to (F):

(A) The dispersion of ceramic particles for the coating are prepared from crystalline powders of particles of at least one ceramic compound and a solvent in the presence of a dispersion additive to form a coating suspension.

In one embodiment, the coating suspension for an intermediate layer comprises particles of at least one ceramic compound, preferably in an amount of ≤ 20 wt.-% based on the total weight of the coating suspension, more preferably in an amount of ≤ 15 wt.- % based on the total weight of the coating suspension, most preferably in an amount of ≤ 10 wt.-% based on the total weight of the coating suspension. In another embodiment, the coating suspension for an intermediate layer comprises particles in an amount of at least 0.1 wt.-% based on the total weight of the coating suspension. In a preferred embodiment, the coating suspension for an intermediate layer comprises particles in an amount of from 0.1 wt.-% to 20 wt.-%. In another preferred embodiment, the coating suspension for an intermediate layer comprises particles in an amount of from 0.1 wt.-% to 15 wt.-%. In another preferred embodiment, the coating suspension for an intermediate layer comprises particles in an amount of from 0.1 wt.-% to 10 wt.-%.

In one embodiment, the coating suspension for a membrane layer comprises particles of at least one ceramic compound, preferably in an amount of ≤ 5 wt.-% based on the total weight of the coating suspension, more preferably in an amount of ≤ 2.5 wt.- % based on the total weight of the coating suspension, most preferably in an amount of ≤ 1 wt.-% based on the total weight of the coating suspension. In another embodiment, the coating suspension for a membrane layer comprises particles in an amount of at least 0.02 wt.-% based on the total weight of the coating suspension. In a preferred embodiment, the coating suspension for a membrane layer comprises particles in an amount of from 0.02 wt.-

% to 5 wt.-%. In another preferred embodiment, the coating suspension for a membrane layer comprises particles in an amount of from 0.02 wt.-% to 2.5 wt.-%. In another preferred embodiment, the coating suspension for a membrane layer comprises particles in an amount of from 0.02 wt.-% to 1 wt.-%.

The suspensions further comprise a dispersion additive to facilitate optimal mixing and prevent accelerated aggregation. The dispersion additive may be selected from the group of surfactants, e.g. carbonic acids or fatty alcohols, or mineral acids. In a preferred embodiment, the dispersion acid is selected from the group consisting of mineral acids. In a preferred embodiment, the dispersion additive is nitric acid. In another preferred embodiment, the dispersion additive is hydrochloric acid. In another preferred embodiment, the dispersion additive is selected from the group consisting of carbonic acids. In another preferred embodiment, the dispersion additive is acetic acid.

Furthermore, a bonding agent may be added to facilitate sintering and enhance the strength of bonding. This bonding agent may be selected from a polymer, especially a polyvinyl alcohol, a polyvinyl pyrrolidone, or a cellulose, or a mixture thereof. In a preferred embodiment, the bonding agent is a polyvinyl alcohol. In another preferred embodiment, the cellulose is selected from a methyl cellulose, and a carboxymethyl cellulose, or mixtures thereof.

In another embodiment, the bonding agent is present in an amount of ≤ 15 wt.-% based on the total weight of the coating suspension, preferably in an amount of ≤ 10 wt.-% based on the total weight of the coating suspension. In another embodiment, the bonding agent is present in an amount of at least 0.5 wt.-% based on the total weight of the coating suspension for the formation of an intermediate layer. In another preferred embodiment, the bonding agent is present in an amount of from 0.5 wt.-% to 15 wt.-% based on the total weight of the coating suspension for the formation of an intermediate layer. In another preferred embodiment, the bonding agent is present in an amount of from 0.5 wt.-% to 10 wt.-% based on the total weight of the coating suspension for the formation of an intermediate layer. In another preferred embodiment, the bonding agent is absent in the coating suspension for the formation of a membrane layer.

Mechanical energy is applied to obtain a uniform distribution of particles in the coating suspension. Mechanical energy may be applied through stirring, shaking or milling with an energy input of from approximately 0.1 kWh / kg of suspension to approximately 6 kWh / kg of suspension. In a preferred embodiment, the energy input is increased for each suspension with every subsequent layer.

(B) In another step of the process of preparation, a layer is formed through contacting the outermost layer of the layered body with a coating suspension. In a preferred embodiment, the outermost layer of the layered body is in the shape of a tube. For coating, the tube is arranged vertically and the tube is filled with coating suspension by a pump. In another preferred embodiment, the tube is filled completely.

The coating suspension is contacted to the outermost layer of the layered body for a dwell time. In one embodiment, the suspension is contacted with the outermost layer of the layered body for a dwell time of less than 120 seconds. In a preferred embodiment, the suspension is contacted with the outermost layer of the layered body for a dwell time of less than 60 seconds. In another preferred embodiment, the suspension is contacted with the outermost layer of the layered body for a dwell time of 60 seconds. In another preferred embodiment, the suspension is contacted with the outermost layer of the layered body for a dwell time of 30 seconds. In another embodiment, the suspension is contacted with the outermost layer of the layered body for a dwell time of at least 10 seconds. In a preferred embodiment, the suspension is contacted with the outermost layer of the layered body for a dwell time of from 10 seconds to 120 seconds. In another preferred embodiment, the suspension is contacted with the outermost layer of the layered body for a dwell time of from 10 seconds to 60 seconds. In another preferred embodiment, the suspension is contacted with the outermost layer of the layered body for a dwell time of from 30 seconds to 60 seconds.

After the dwell time, the coating suspension is removed carefully, leaving a film on the support. In one embodiment, the suspension is bled out of the tube leaving a film of coating suspension on the surface of the outermost layer of the layered body. The thickness of the film left on the outermost layer of the layered body can be controlled by the dwell time through the effect of concentration polarization and the shear forces caused by the velocity of the coating suspension during the drainage from the surface to be coated. The particles form a layer on top of the outermost layer of the layered body through interlocking between the particles and adhesion forces which are enhanced by capillary effects of the solid layer below the film. The layer thickness is controlled by the dwell time and the concentration of particles in the coating suspension.

(C) Afterwards, the residual film of coating suspension is dried. In one embodiment, the film is dried under air atmosphere. In another embodiment, the film is dried under air atmosphere at room temperature. In a preferred embodiment, the film is dried for at least 12 h. In another embodiment, the film is dried at a temperature of from 60 °C to 90 °C under an air atmosphere. In a more preferred embodiment, the film is dried at a temperature of from 60 °C to 90 °C under an air atmosphere for 2 h to 6 h.

The dried film is submitted to a sintering process.

(D) The sinter temperatures must be chosen to be compatible with the maximum sinter temperature of the support and the material to be sintered. In case, at least one layer has been coated onto the support, the sinter temperatures must be chosen according to the maximum sinter temperature of one of the layers or the support, depending on which is the lowest. In preferred embodiments, the sinter temperatures are in a range of from 300 °C to 1400 °C. In another preferred embodiment, the sinter temperature is lowered with every subsequent layer as compared to the preceding layer. In another preferred embodiment, the sinter temperature during sintering of the first intermediate layer is in the range of from 1000 °C to 1400 °C. In another preferred embodiment, the temperature during sintering is reduced by at least 100 °C during every sintering step in the preparation of any subsequent layer.

In one embodiment, the sintering is performed at a temperature of from above 300°C, preferably above 350 °C, more preferably below 1700 °C, further preferably below 1500 °C, further preferably below 1400 °C, further preferably in the range of from 300 °C to 1700 °C, further preferably in the range of from 300 °C to 1500 °C, further preferably in the range of from 300 °C to 1500 °C, most preferably in the range of from 300 °C to 1400 °C or in the range of from 350 °C to 1400 °C.

In the sense of the present disclosure, all sintering steps for the sintering of metal oxides are executed under an atmosphere of air.

It is understood that metal carbides and metal nitrides require a careful selection of the conditions during sintering. As a consequence, in one embodiment of the present disclosure, filtration elements comprising metal carbides and/or metal nitrides may be sintered at temperatures below 900 °C under an atmosphere of air. In another embodiment of the present disclosure, filtration elements comprising metal carbides and/or metal nitrides may be sintered under an inert atmosphere, such as argon atmosphere or nitrogen atmosphere, or in a vacuum at a sinter temperature in a range of from 1000 °C to 2000 °C.

(E) In one embodiment, the steps (A) to (D) of the process of manufacture can be repeated with the same suspension until the desired thickness of a layer is obtained. In preferred embodiments, all steps are conducted at least once per layer. In another preferred embodiment, the all steps of the process are not conducted more than six times per layer. In the sense of the present disclosure, layers consisting of the same materials with regard to the chemical composition and particle size are regarded to as one layer.

(F) In another embodiment, steps (A) to (E) are repeated to form layers with different chemical properties, whereas the suspension is changed for the suspensions comprising the particles of the at least one ceramic compound building the subsequent layers, respectively. Steps (A) to (E) are repeated until all desired layers are attached onto the layered body.

In a preferred embodiment, three intermediate layers and one membrane layer are formed by consecutive repetition of steps (A) to (E) with different coating suspensions.

In another embodiment, the filtration elements described herein are used in the process of liquid filtration.

In the following, the present disclosure is demonstrated by means of examples without the intention to narrow the scope of the disclosure. The scope of protection of the present disclosure shall only be limited by the claims.

EXAMPLES

General preparation process for suspensions of crystalline particles of at least one metal oxide

Crystalline particles of the at least one metal oxide are obtained from commercial suppliers or milled until the desired particle size and shape is obtained. The mean particle size is given as the numerical $D_{10}$, $D_{50}$ and $D_{90}$ values which are determined by DLS prior to coating with a NANO-flex machine (obtained from Microtrac Europe GmbH).

For the preparation of a dispersion, a solvent (e.g., water), crystalline particles of the at least one metal oxide and optionally a dispersion agent (e.g., nitric acid or acetic acid) are mixed by means of applying energy through a pearl mill applying milling energy. Thereby, the amount of milling energy is adjusted to the requirements of the crystalline particles of the at least one metal oxide.

In this way, base suspensions can be obtained containing a 1 : 1 mixture of solvent and the crystalline ceramic nanoparticle with regard to their weight ratio (weight (solvent): weight (particle)) and dispersion additive.

Coating suspensions

Prior to the process of coating, a suitable base suspension is diluted with solvent and mixed with a bonding agent. The amount of nanoparticles in the resulting coating suspension is expressed in weight-% (wt.-%) based on the total sum of mixtures unless specified otherwise.

The amount of crystalline particles of the at least one metal oxide is adjusted individually for each type of nanoparticle to be used in the preparation process.

For preparing the ceramic coating suspension base suspension and water are homogeneously mixed. Subsequently, the bonding agent is added while stirring.

Suitable coating suspensions have the following compositions:

**Table** 1 Exemplary compositions for the coating of layers

| | $H_2O$ [wt.-%] | Particles of the at least one metal oxide | Base suspension [wt.-%] | Bonding agent [wt.-%] |
|---|---|---|---|---|
| 1st intermediate layer | 75 | $Al_2O_3$; $D_{10}$ = 100 nm; $D_{50}$ = 160 nm; $D_{90}$ = 310 nm Z = 3.1 | 20 | 20 wt.-% Polyvinyl alcohol in $H_2O$ (5) |
| 2nd intermediate layer | 77 | $Al_2O_3$; $D_{10}$ = 80 nm, $D_{50}$ = 120 nm, $D_{90}$ = 190 nm Z = 2.4 | 20 | 20 wt.-% Polyvinyl alcohol in $H_2O$ (3) |
| 3rd intermediate layer | 97.3 | $TiO_2$; $D_{10}$ = 15 nm, $D_{50}$ = 20 nm, $D_{90}$ = 30 nm Z = 2.0 | 1.68 | 20 wt.-% Polyvinyl alcohol in $H_2O$ (1) |
| Membrane layer | 99.7 | $TiO_2$; $D_{10}$ = 6 nm, $D_{50}$ = 7 nm, $D_{90}$ = 11 nm Z = 1.8 | 0.3 | 0 wt.-% |

Coating on ceramic support

The aforementioned coating suspension is filled into the inside of vertically oriented ceramic support tubes. The solution is left in the support tubes for a time of 60 seconds after which the coating suspension is bled. The remaining film on the inner surface of the tube is left to dry. Afterwards, that the coated tubes can be sintered until sufficient strength is obtained. After the sintering process, the next layer can be coated on the preceding layer in the same manner. These steps are repeated until the membrane layer is coated onto the last intermediate layer.

By applying this method, a ceramic filtration elements (M1) with a minimal defect rate (see Figures 2, 3, and 4) and hence optimal properties for separation and filtration purposes can be manufactured.

Characterization of filtration elements - MWCO

The quality of filtration was analyzed using MWCO analysis with PEGs (see Figure 1). With polyethylene glycols, the MWCO was calculated as $D_{90}$ = 2.9 kDa representing a mean pore size in the low nanometer range. It is also shown in Figure 1 that the membrane M1 according to the present disclosure shows a steep slope of the sieve curve and an improved retention of high molecular weight PEGs compared to the competitor's membrane despite the larger nominal mean pore size of M1.

The abovementioned ceramic filtration element M1 was also analyzed with regard to the retention performance of dextranes of different molecular weights. A MWCO was determined as $D_{90}$ = 4 kDa with dextranes at which 90 % of the molecules are retained at the element.

As compared to the ceramic filtration elements described in the prior art, the filtration element M1 of the present disclosure show an improved filtration behavior as demonstrated in the following:

mixture of high molecular weight derivative compound of a biopolymer (MW: 20,000 to 50,000 Da) and medium molecular weight derivative compound of a biopolymer (MW: 2,000 to 3,000 Da) mimicking an industrial filtration problem was filtered through the abovementioned filtration element, and a commercially available membrane obtained from Orelis® (MWCO = 1 kDa) and constitutes an example of prior art giving the following results:

**Table 2** Comparison of filtration performance of a filtration element according to the present disclosure and a comparative elements with smaller nominal pore size

| | Volume reduction [%] | Transmembrane Pressure[bar] | Temperature [°C] | Flux [l/m²h] | Retention [%] | Rejection [%] |
|---|---|---|---|---|---|---|
| Comparative element 1 (MWCO: 1 kDA) | 80 | 2.8 | 37 | 22.5 | 59.1 | 79.4 |
| M1 (MWCO: 4 kDa) | 80 | 3.4 | 35 | 44.3 | 65.8 | 83.9 |

The results of this test reveal, that the flux is almost 100 % higher at a lower transmembrane pressure when M1 is used for the filtration process as compared to the competitor element. At the same time, more high molecular weight biopolymer is retained in the mixture. Hence, the filtration with M1 is less time consuming, more energy efficient and has an improved performance in terms of higher selectivity and separation efficiency over the comparative element known from the prior art.

Characterization of filtration elements - repeated use

In another experiment the separation of a high molecular weight biopolymer from primary industry from a low molecular weight aromatic compound (MW: 100 to 500 Da) was investigated. Therein, the volume reduction of used feed (mixture of the components in $H_2O$) was set to 60 % and the mixtures were filtered through a variety of state of the art ceramic filtration elements obtained from commercial suppliers and the filtration element of the present disclosure (M1) at a cross-flow-velocity of 3 m/s and a transmembrane pressure of 2 bar. All filtration elements had the same geometry.

After a first filtration process, the filtration elements were cleaned with a commercially available membrane cleaner (e.g. P3-Ultrasil (obtained from Ecolab), acids or bases) and the filtration was repeated.

**Table 3** Results of a comparison of a filtration element according to the present disclosure and a variety of comparative filtration elements (CFE) obtained from commercial suppliers in a complex filtration task. Retention is expressed as the retention of the high molecular weight biopolymer from primary industry.

| | Material of outer-most layer | MWCO | Retention 1st run [%] | Retention 2nd run [%] | Average permeability (120-240 min; 1st run) [L/($M^2$*h*bar)] | Average permeability (120-240 min; 2nd run) [L/($m^2$*h*bar)] |
|---|---|---|---|---|---|---|
| M1 | $TiO_2$ | 4 kDa | 78.4 | 86.0 | 6.06 | 3.99 |
| CFE 2[A] | $ZrO_2$ | 1 kDa | 85.55 | 91.8 | 2.59 | 1.83 |
| CFE 3[B] | $TiO_2$ | 1 kDa | 79.3 | 72.1 | 6.18 | 3.99 |
| CFE 4[C] | $TiO_2$ | 3 kDa | 77.1 | 77.4 | 5.44 | 3.25 |
| CFE 5[D] | $TiO_2$ | 5 kDa | 76.4 | 71.2 | 8.09 | 6.53 |
| CFE 6[E] | $ZrO_2$ | 0.2 kDa | 88.6 | 89.7 | 1.29 | 1.88 |
| CFE 7[F] | $TiO_2$ | 0.9 kDa | 94.9 | 89.7 | 1.59 | 2.77 |
| CFE 8[G] | $ZrO_2$ | 3 kDa | 73.9 | 76.0 | 8.31 | 9.61 |

A: obtained from Atech®; B: obtained from Tami®; C: obtained from Tami®; D: obtained from Tami®; E: obtained from Inopor®; F: obtained from Inopor®; G: obtained from Inopor®.

The filtration element of the present disclosure effectively retains the high molecular weight biopolymers, whereas the low molecular weight aromatic compound passed through the membrane. Membrane permeability remained high as compared to all comparative filtration elements known from the prior art and obtained from commercial suppliers. This is surprising in view of the larger MWCO and hence larger pore size of the disclosed membrane compared to the comparative filtration elements. This reveals that the preparation of membranes with a low defect rate is highly favorable because the high retention of the high molecular weight biopolymer from primary industry is paired with a high permeability as a consequence of the narrow pore size distribution and the smooth membrane surface.

**Claims**

**1.** A multilayered ceramic filtration element for nanofiltration and ultrafiltration in liquid purification and filtration processes with a pore size between 1 and 100 nm comprising

    i) a ceramic support structure, wherein the support structure has a mean pore size of from 0.5 to 1.5 $\mu$m;
    ii) a membrane layer,
    iii) at least one intermediate layer interposed between the ceramic support structure and the membrane layer, wherein the at least one intermediate layer comprises particles with a particle size of $D_{10}$ in the range of from 70 to 250 nm; and

wherein all layers comprise particles of at least one ceramic compound selected from the group consisting of metal oxides, metal carbides and metal nitrides, the at least one intermediate layer comprises particles of the at least one ceramic compound with a Z-ratio $D_{90}/D_{10}$ of up to 4,

wherein

the multilayer ceramic filtration element comprising at least two intermediate layers, wherein a first intermediate layer is directly supported on the ceramic support structure and a second intermediate layer is directly supported on the first intermediate layer and the mean pore size of the first intermediate layer is from 110 to 170 nm, wherein the layers are formed by consecutive application of suspensions comprising particles of at least one ceramic compound of different sizes to a ceramic support structure, thereby avoiding a sol-gel process, wherein the process for each layer comprises the steps of

a) providing a coating suspension comprising particles of at least one ceramic compound;

b) contacting the surface of the ceramic support structure with a coating suspension for a duration of time;

c) removing the excess coating suspension without removing a residual film of coating suspension on the surface;

d) drying the residual film; and

e) sintering the layered body;

wherein the suspension of ceramic particles for the coating are prepared from crystalline powders of particles of at least one ceramic compound and a solvent in the presence of a dispersion additive to form a coating suspension,

wherein the size of the particles is reduced with every consecutive intermediate layer; the membrane layer comprises the smallest particles resulting in the smallest mean pore size, and

wherein the particles of the different layers are chosen in that the mean pore size of the subsequent intermediate layer is smaller than the mean pore size of the preceding layer,

wherein the mean pore sizes of the support and intermediate layers are determined by capillary flow porometry, the mean pore size of the membrane layer is measured as indicated in the description and wherein $D_{10}$ and $D_{90}$ are numerical $D_{10}$ and $D_{90}$ values determined by dynamic light scattering.

2. The multilayered ceramic filtration element according to claim 1, wherein the at least one ceramic compound of the at least one intermediate layer is selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AlN, WC, $B_4C$, TiN, and mixtures thereof, preferably selected from the group consisting of $Al_2O_3$, $SiO_2$, $TiO_2$, $ZrO_2$, SiC, $Si_3N_4$, AlN, TiN, and mixtures thereof, more preferably wherein the at least one ceramic compound is $Al_2O_3$, $TiO_2$ or $ZrO_2$, SiC, TiN, or a mixture thereof, most preferably wherein the at least one ceramic compound is SiC or $Al_2O_3$.

3. The multilayer ceramic filtration element according to any one of claims 1 or 2, wherein the at least one intermediate layer comprises particles with a particle size of $D_{10}$ in the range of from 100 to 180 nm, and preferably $D_{90}$ in the range of from 200 to 500 nm, more preferably of from 250 to 400 nm.

4. The multilayer ceramic filtration element according to claim 1, wherein the at least one ceramic compound of the second intermediate layer is selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AlN, WC, $B_4C$, TiN, and mixtures thereof, preferably selected from $Al_2O_3$, $SiO_2$, $TiO_2$, $ZrO_2$, SiC, $Si_3N_4$, AlN, TiN, and mixtures thereof, more preferably wherein the at least one ceramic compound is $Al_2O_3$, $TiO_2$ or $ZrO_2$, SiC, TiN, or a mixture thereof, most preferably wherein the at least one ceramic compound is SiC or $Al_2O_3$.

5. The multilayer ceramic filtration element according to claims 1 or 4, wherein the second intermediate layer comprises particles with a Z-ratio $D_{90}/D_{10}$ of up to 3, preferably wherein the particle size $D_{10}$ is in the range of from 50 to 170 nm, preferably of from 80 to 120 nm, and further preferably $D_{90}$ is in the range of from 150 to 350 nm, more preferably of from 180 to 210 nm.

6. The multilayer ceramic filtration element according to claim 1 comprising at least three intermediate layers, wherein a first intermediate layer is directly supported on the ceramic support structure, a second intermediate layer is directly supported on the first intermediate layer, and a third intermediate layer is directly supported on the second intermediate layer, wherein the at least one ceramic compound of the third intermediate layer, is selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC,

$Si_3N_4$, BN, AIN, WC, $B_4C$, TiN, and mixtures thereof, preferably selected from $Al_2O_3$, $SiO_2$, $TiO_2$, $ZrO_2$, SiC, $Si_3N_4$, AIN, TiN, and mixtures thereof, more preferably wherein the at least one ceramic compound is $Al_2O_3$, $TiO_2$ or $ZrO_2$, SiC, TiN, or a mixture thereof, most preferably wherein the at least one ceramic compound is $Al_2O_3$ or $TiO_2$.

7. The multilayer ceramic filtration element according to claims 1 or 6, wherein the third intermediate layer comprises particles with a Z-ratio $D_{90}/D_{10}$ of up to 6, preferably up to 3, more preferably wherein the particle size $D_{10}$ is in the range of from 8 to 25 nm, preferably of from 12 to 17 nm, and further preferably $D_{90}$ is in the range of from 18 to 50 nm, more preferably of from 25 to 35 nm.

8. The multilayer ceramic filtration element according to any one of the preceding claims, wherein the at least one ceramic compound of the membrane layer is selected from the group consisting of $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AIN, WC, $B_4C$, TiN, and mixtures thereof, preferably selected from $Al_2O_3$, $SiO_2$, $TiO_2$, $ZrO_2$, SiC, $Si_3N_4$, AIN, TiN, and mixtures thereof, more preferably wherein the at least one ceramic compound is $Al_2O_3$, $TiO_2$ or $ZrO_2$, SiC, TiN, or a mixture thereof, most preferably wherein the at least one ceramic compound is $Al_2O_3$, $TiO_2$ or $ZrO_2$.

9. The multilayer ceramic filtration element according to any one of the preceding claims, wherein

   f) the membrane layer consists of $TiO_2$ particles with a Z-ratio $D_{90}/D_{10}$ of less than 3, preferably wherein the particles size $D_{10}$ is in the range of from 5 to 9 nm, and further preferably $D_{90}$ is in the range of from 9 to 15 nm; or
   g) wherein the membrane layer consists of $ZrO_2$ particles with a Z-ratio $D_{90}/D_{10}$ of less than 5, preferably wherein the particle size $D_{10}$ is in the range of from 1 to 3 nm, and further preferably $D_{90}$ is in the range of from 3 to 5 nm.

10. A process for manufacturing a multilayer ceramic filtration element according to any one of the preceding claims, wherein the layers are formed by consecutive application of suspensions comprising particles of at least one ceramic compound of different sizes to a ceramic support structure, thereby avoiding a sol-gel process.

11. The process according to claim 10, wherein the process for each layer comprises the steps of

   a) providing a coating suspension comprising particles of at least one ceramic compound;
   b) contacting the surface of the ceramic support structure with a coating suspension for a duration of time, preferably for 10 to 120 seconds, more preferably for 20 to 90 s, further preferably for 30 to 60 S, or for 30 s or 60 s;
   c) removing the excess coating suspension without removing a residual film of coating suspension on the surface;
   d) drying the residual film;
   e) sintering the layered body, preferably at a temperature of below 1500 °C, more preferably wherein the temperature is reduced with every subsequent sintering step; and
   f) optionally repeating steps a) - d) until the desired thickness of the layer is achieved, preferably up to 8 times.

12. The process according to any one of claims 10 or 11, wherein at least three intermediate layers, and one membrane layer are formed.

13. The process according to claim 10, wherein for two directly adjacent intermediate layers, the layer proximate to the ceramic support structure has a greater thickness than the layer proximate to the membrane layer.

14. The process according to any one of claims 11 to 13, wherein the coating suspension comprises

   a) particles of at least one ceramic compound, preferably in an amount of $\leq$ 20 wt.-% based on the total weight of the coating suspension, more preferably in an amount of $\leq$ 15 wt.-% based on the total weight of the coating suspension, most preferably in an amount of $\leq$ 10 wt.-% based on the total weight of the coating suspension ;
   b) a bonding agent, preferably a polyvinyl alcohol, a polyvinyl pyrrolidone, or a cellulose, or a mixture thereof, further preferably in an amount of $\leq$ 5 wt.-% based on the total weight of the coating suspension, more preferably in an amount of $\leq$ 2 wt.-% based on the total weight of the coating suspension, most preferably in an amount of $\leq$ 1 wt.-% based on the total weight of the coating suspension; and
   c) a solvent, preferably water or a $C_{1-6}$ alcohol, more preferably water or ethanol, more preferably water, wherein the solvent accounts for the residual weight of the coating suspension.

15. The process according to any one of claims 11 to 14, wherein the drying step comprises air drying for at least 12 h, preferably for at least 12 h and less than 48 h.

16. The process according to any one of claims 11 to 15, wherein the sintering is performed at a temperature of from above 300°C, preferably above 350 °C, more preferably below 1700 °C, further preferably below 1500 °C, further preferably below 1400 °C, further preferably in the range of from 300 °C to 1700 °C, further preferably in the range of from 300 °C to 1500 °C, further preferably in the range of from 300 °C to 1500 °C, most preferably in the range of from 300 °C to 1400 °C or in the range of from 350 °C to 1400 °C.

17. The process according to any one of claims 11 to 16, wherein the sintering temperature for the layer proximate to the membrane layer is at least 100 °C lower than the sintering temperature of all layers proximate to the support structure.

18. The process according to any one of claims 11 to 17, wherein the sintering temperature for the membrane layer is above 300 °C and lower than 600 °C, preferably lower than 500 °C.

**Patentansprüche**

1. Mehrschichtiges keramisches Filtrationselement für die Nanofiltration und Ultrafiltration in Flüssigkeitsreinigungs- und Filtrationsverfahren mit einer Porengröße zwischen 1 und 100 nm, umfassend

   i) eine keramische Stützstruktur, wobei die Stützstruktur eine mittlere Porengröße von 0,5 bis 1,5 $\mu$m hat;
   ii) eine Membranschicht,
   iii) mindestens eine Zwischenschicht, die zwischen der keramischen Stützstruktur und der Membranschicht angeordnet ist, wobei die mindestens eine Zwischenschicht Partikel mit einer Partikelgröße $D_{10}$ im Bereich von 70 bis 250 nm umfasst; und
   wobei alle Schichten Partikel aus mindestens einer keramischen Verbindung umfassen, die aus der Gruppe ausgewählt ist, die aus Metalloxiden, Metallcarbiden und Metallnitriden besteht, wobei die mindestens eine Zwischenschicht Partikel aus der mindestens einen keramischen Verbindung mit einem Z-Verhältnis $D_{90}/D_{10}$ von bis zu 4 umfasst,

   wobei

   das mehrschichtige keramische Filtrationselement mindestens zwei Zwischenschichten umfasst, wobei eine erste Zwischenschicht direkt auf der keramischen Stützstruktur aufliegt und eine zweite Zwischenschicht direkt auf der ersten Zwischenschicht aufliegt und die durchschnittliche Porengröße der ersten Zwischenschicht 110 bis 170 nm beträgt, wobei
   die Schichten durch aufeinanderfolgendes Auftragen von Suspensionen, die Partikel mindestens einer keramischen Verbindung unterschiedlicher Größe umfassen, auf eine keramische Stützstruktur gebildet werden, wodurch ein Sol-Gel-Verfahren vermieden wird, wobei das Verfahren für jede Schicht die folgenden Schritte umfasst

   a) Bereitstellen einer Beschichtungssuspension, die Partikel aus mindestens einer keramischen Verbindung umfasst;
   b) Kontaktieren der Oberfläche der keramischen Stützstruktur mit einer Beschichtungssuspension über einen bestimmten Zeitraum;
   c) Entfernen der überschüssigen Beschichtungssuspension, ohne einen Restfilm der Beschichtungssuspension auf der Oberfläche zu entfernen;
   d) Trocknen des Restfilms; und
   e) Sinterung des Schichtkörpers;

   wobei die Suspension der keramischen Partikel für die Beschichtung aus kristallinen Pulvern von Partikeln mindestens einer keramischen Verbindung und einem Lösungsmittel bei Vorhandensein eines Dispersionsadditivs hergestellt wird, um eine Beschichtungssuspension zu bilden,
   wobei die Größe der Partikel mit jeder aufeinanderfolgenden Zwischenschicht verringert wird; die Membranschicht umfasst die kleinsten Partikel, was die kleinste durchschnittliche Porengröße zur Folge hat, und
   wobei die Partikel der unterschiedlichen Schichten so gewählt werden, dass die durchschnittliche Porengröße der nachfolgenden Zwischenschicht kleiner ist als die durchschnittliche Porengröße der vorherigen Schicht, wobei die durchschnittlichen Porengrößen der Träger- und Zwischenschichten durch Kapillarströmungsporometrie bestimmt werden, die durchschnittliche Porengröße der Membranschicht wie in der Beschreibung angegeben gemessen wird und wobei $D_{10}$ und $D_{90}$ numerische $D_{10}$- und $D_{90}$-Werte sind, die durch dynamische Lichtstreuung bestimmt werden.

2. Mehrschichtiges keramisches Filtrationselement nach Anspruch 1, wobei die mindestens eine keramische Verbindung der mindestens einen Zwischenschicht ausgewählt ist aus der Gruppe bestehend aus $Al_2O_3$, $BeO$, $CaO$, $HfO_2$, $FeO$, $Fe_2O_3$, $La_2O_3$, $MgO$, $MnO_2$, $SiO_2$, $SrO$, $ThO_2$, $TiO_2$, $Y_2O_3$, $ZrO_2$, $SiC$, $Si_3N_4$, $BN$, $AIN$, $WC$, $B_4C$, $TiN$, und Mischungen derselben, vorzugsweise ausgewählt aus der Gruppe bestehend aus $Al_2O_3$, $SiO_2$, $TiO_2$, $ZrO_2$, $SiC$, $Si_3N_4$, $AIN$, $TiN$, und Mischungen derselben, wobei noch bevorzugter die mindestens eine keramische Verbindung $Al_2O_3$, $TiO_2$ or $ZrO_2$, $SiC$, $TiN$, ist oder eine Mischung derselben, wobei am meisten bevorzugt die mindestens eine keramische Verbindung $SiC$ oder $Al_2O_3$ ist.

3. Mehrschichtiges keramisches Filtrationselement nach einem der Ansprüche 1 oder 2, wobei die mindestens eine Zwischenschicht Partikel mit einer Partikelgröße $D_{10}$ im Bereich von 100 bis 180 nm und vorzugsweise $D_{90}$ im Bereich von 200 bis 500 nm, besonders bevorzugt von 250 bis 400 nm umfasst.

4. Mehrschichtiges keramisches Filtrationselement nach Anspruch 1, wobei die mindestens eine keramische Verbindung der zweiten Zwischenschicht ausgewählt ist aus der Gruppe bestehend aus $Al_2O_3$, $BeO$, $CaO$, $HfO_2$, $FeO$, $Fe_2O_3$, $La_2O_3$, $MgO$, $MnO_2$, $SiO_2$, $SrO$, $ThO_2$, $TiO_2$, $Y_2O_3$, $ZrO_2$, $SiC$, $Si_3N_4$, $BN$, $AIN$, $WC$, $B_4C$, $TiN$, und Mischungen derselben, vorzugsweise ausgewählt aus $Al_2O_3$, $SiO_2$, $TiO_2$, $ZrO_2$, $SiC$, $Si_3N_4$, $AIN$, $TiN$, und Mischungen derselben, wobei noch bevorzugter die mindestens eine keramische Verbindung $Al_2O_3$, $TiO_2$ or $ZrO_2$, $SiC$, $TiN$, ist oder eine Mischung derselben, wobei am meisten bevorzugt die mindestens eine keramische Verbindung $SiC$ oder $Al_2O_3$ ist.

5. Mehrschichtiges keramisches Filtrationselement nach Anspruch 1 oder 4, wobei die zweite Zwischenschicht Partikel mit einem Z-Verhältnis $D_{90}/D_{10}$ von bis zu 3 umfasst, wobei vorzugsweise die Partikelgröße $D_{10}$ im Bereich von 50 bis 170 nm liegt, vorzugsweise von 80 bis 120 nm, und weiter bevorzugt $D_{90}$ im Bereich von 150 bis 350 nm, noch bevorzugter von 180 bis 210 nm umfasst.

6. Mehrschichtiges keramisches Filtrationselement nach Anspruch 1, umfassend mindestens drei Zwischenschichten, wobei eine erste Zwischenschicht direkt auf die keramische Stützstruktur aufgetragen wird, eine zweite Zwischenschicht wird direkt auf die erste Zwischenschicht aufgetragen, und eine dritte Zwischenschicht wird direkt auf die zweite Zwischenschicht aufgetragen, wobei die mindestens eine keramische Verbindung der dritten Zwischenschicht ausgewählt ist aus der Gruppe bestehend aus $Al_2O_3$, $BeO$, $CaO$, $HfO_2$, $FeO$, $Fe_2O_3$, $La_2O_3$, $MgO$, $MnO_2$, $SiO_2$, $SrO$, $ThO_2$, $TiO_2$, $Y_2O_3$, $ZrO_2$, $SiC$, $Si_3N_4$, $BN$, $AIN$, $WC$, $B_4C$, $TiN$, und Mischungen derselben, vorzugsweise ausgewählt aus $Al_2O_3$, $SiO_2$, $TiO_2$, $ZrO_2$, $SiC$, $Si_3N_4$, $AIN$, $TiN$, und Mischungen derselben, wobei noch bevorzugter die mindestens eine keramische Verbindung $Al_2O_3$, $TiO_2$ oder $ZrO_2$, $SiC$, $TiN$ ist, oder eine Mischung derselben, wobei am meisten bevorzugt die mindestens eine keramische Verbindung $Al_2O_3$ oder $TiO_2$ ist.

7. Mehrschichtiges keramisches Filtrationselement nach Anspruch 1 oder 6, wobei die dritte Zwischenschicht Partikel mit einem Z-Verhältnis $D_{90}/D_{10}$ von bis zu 6, vorzugsweise von bis zu 3 umfasst, wobei noch bevorzugter die Partikelgröße $D_{10}$ im Bereich von 8 bis 25 nm liegt, vorzugsweise von 12 bis 17 nm, und weiter bevorzugt $D_{90}$ im Bereich von 18 bis 50 nm, noch bevorzugter von 25 bis 35 nm umfasst.

8. Mehrschichtiges keramisches Filtrationselement nach einem der obigen Ansprüche, wobei die mindestens eine keramische Verbindung der Membranschicht ausgewählt ist aus der Gruppe bestehend aus $Al_2O_3$, $BeO$, $CaO$, $HfO_2$, $FeO$, $Fe_2O_3$, $La_2O_3$, $MgO$, $MnO_2$, $SiO_2$, $SrO$, $ThO_2$, $TiO_2$, $Y_2O_3$, $ZrO_2$, $SiC$, $Si_3N_4$, $BN$, $AIN$, $WC$, $B_4C$, $TiN$, und Mischungen derselben, vorzugsweise ausgewählt aus $Al_2O_3$, $SiO_2$, $TiO_2$, $ZrO_2$, $SiC$, $Si_3N_4$, $AIN$, $TiN$, und Mischungen derselben, wobei noch bevorzugter die mindestens eine keramische Verbindung $Al_2O_3$, $TiO_2$ oder $ZrO_2$, $SiC$, $TiN$, ist oder eine Mischung derselben, wobei am meisten bevorzugt die mindestens eine keramische Verbindung $Al_2O_3$, $TiO_2$ oder $ZrO_2$ ist.

9. Mehrschichtiges keramisches Filtrationselement nach einem der obigen Ansprüche, wobei

f) die Membranschicht aus $TiO_2$-Partikeln mit einem Z-Verhältnis $D_{90}/D_{10}$ von weniger als 3 besteht, wobei die Partikelgröße $D_{10}$ vorzugsweise im Bereich von 5 bis 9 nm und $D_{90}$ weiter bevorzugt im Bereich von 9 bis 15 nm liegt; oder
g) wobei die Membranschicht aus $ZrO_2$-Partikeln mit einem Z-Verhältnis $D_{90}/D_{10}$ von weniger als 5 besteht, wobei die Partikelgröße $D_{10}$ vorzugsweise im Bereich von 1 bis 3 nm und $D_{90}$ weiter bevorzugt im Bereich von 3 bis 5 nm liegt.

10. Verfahren zur Herstellung eines mehrschichtigen keramischen Filtrationselements nach einem der obigen Ansprüche, wobei die Schichten durch aufeinanderfolgendes Auftragen von Suspensionen, die Partikel mindestens einer keramischen Verbindung unterschiedlicher Größe umfassen, auf eine keramische Stützstruktur gebildet werden, wodurch ein Sol-Gel-Verfahren vermieden wird.

11. Verfahren nach Anspruch 10, wobei das Verfahren für jede Schicht folgende Schritte umfasst

   a) Bereitstellen einer Beschichtungssuspension, die Partikel aus mindestens einer keramischen Verbindung umfasst;
   b) Kontaktieren der Oberfläche der keramischen Stützstruktur mit einer Beschichtungssuspension über einen bestimmten Zeitraum, vorzugsweise für 10 bis 120 Sekunden, noch bevorzugter für 20 bis 90 Sekunden, weiter bevorzugt für 30 bis 60 Sekunden, oder für 30 Sekunden oder 60 Sekunden;
   c) Entfernen der überschüssigen Beschichtungssuspension, ohne einen Restfilm der Beschichtungssuspension auf der Oberfläche zu entfernen;
   d) Trocknen des Restfilms;
   e) Sinterung des Schichtkörpers, vorzugsweise bei einer Temperatur von unter 1500 °C, wobei noch bevorzugter die Temperatur mit jedem nachfolgenden Sinterungsvorgang verringert wird; und
   f) wahlweise Wiederholung der Schritte a) - d), bis die gewünschte Schichtdicke erreicht ist, vorzugsweise bis zu 8 Mal.

12. Verfahren nach einem der Ansprüche 10 oder 11, wobei mindestens drei Zwischenschichten und eine Membranschicht gebildet werden.

13. Verfahren nach Anspruch 10, wobei bei zwei direkt benachbarten Zwischenschichten die Schicht in der Nähe der keramischen Stützstruktur eine größere Dicke hat als die Schicht in der Nähe der Membranschicht.

14. Verfahren nach einem der Ansprüche 11 bis 13, wobei die Beschichtungssuspension umfasst

   a) Partikel aus mindestens einer keramischen Verbindung, vorzugsweise in einer Menge von $\leq$ 20 Gew.-% basierend auf dem Gesamtgewicht der Beschichtungssuspension, noch bevorzugter in einer Menge von $\leq$ 15 Gew.-% basierend auf dem Gesamtgewicht der Beschichtungssuspension, am meisten bevorzugt in einer Menge von $\leq$ 10 Gew.-% basierend auf dem Gesamtgewicht der Beschichtungssuspension;
   b) ein Bindemittel, vorzugsweise ein Polyvinylalkohol, ein Polyvinylpyrrolidon oder eine Cellulose oder eine Mischung derselben, weiter bevorzugt in einer Menge von $\leq$ 5 Gew.-% basierend auf dem Gesamtgewicht der Beschichtungssuspension, noch bevorzugter in einer Menge von $\leq$ 2 Gew.-% basierend auf dem Gesamtgewicht der Beschichtungssuspension, am meisten bevorzugt in einer Menge von $\leq$ 1 Gew.-% basierend auf dem Gesamtgewicht der Beschichtungssuspension; und
   c) ein Lösungsmittel, vorzugsweise Wasser oder ein $C_{1-6}$-Alkohol, noch bevorzugter Wasser oder Ethanol, noch bevorzugter Wasser, wobei das Lösungsmittel das Restgewicht der Beschichtungssuspension ausmacht.

15. Verfahren nach einem der Ansprüche 11 bis 14, wobei der Trocknungsschritt eine Lufttrocknung von mindestens 12 h, vorzugsweise von mindestens 12 h und weniger als 48 h umfasst.

16. Verfahren nach einem der Ansprüche 11 bis 15, wobei das Sintern bei einer Temperatur von über 300 °C, vorzugsweise über 350 °C, noch bevorzugter unter 1700 °C, weiter bevorzugt unter 1500 °C, weiter bevorzugt unter 1400 °C, weiter bevorzugt im Bereich von 300 °C bis 1700 °C, weiter bevorzugt im Bereich von 300 °C bis 1500 °C, weiter bevorzugt im Bereich von 300 °C bis 1500 °C, am meisten bevorzugt im Bereich von 300 °C bis 1400 °C oder im Bereich von 350 °C bis 1400 °C durchgeführt wird.

17. Verfahren nach einem der Ansprüche 11 bis 16, wobei die Sintertemperatur für die Schicht in der Nähe der Membranschicht um mindestens 100 °C niedriger ist als die Sintertemperatur aller Schichten in der Nähe der Stützstruktur.

18. Verfahren nach einem der Ansprüche 11 bis 17, wobei die Sintertemperatur für die Membranschicht über 300 °C und unter 600 °C, vorzugsweise unter 500 °C, liegt.

**Revendications**

1. Élément de filtration en céramique multicouche destiné à la nanofiltration et l'ultrafiltration dans des processus de purification et de filtration de liquide avec une taille de pore entre 1 et 100 nm, comprenant

   i) une structure de support en céramique, la structure de support ayant une taille moyenne de pore allant de 0,5 à 1,5 $\mu$m ;
   ii) une couche de membrane,
   iii) au moins une couche intermédiaire interposée entre la structure de support en céramique et la couche de membrane, la couche intermédiaire, au moins au nombre d'une, comprenant des particules avec une taille de particules de $D_{10}$ dans la plage allant de 70 à 250 nm ; et
   dans lequel toutes les couches comprennent des particules d'au moins un composé de céramique choisi dans le groupe constitué par oxydes métalliques, carbures métalliques et nitrures métalliques, la couche intermédiaire;
   au moins au nombre d'une, comprend des particules du composé de céramique, au moins au nombre d'un, avec un rapport Z $D_{90}/D_{10}$ allant jusqu'à 4,

   dans lequel

   l'élément de filtration en céramique multicouche comprend au moins deux couches intermédiaires, une première couche intermédiaire étant directement supportée sur la structure de support en céramique et une deuxième couche intermédiaire étant directement supportée sur la première couche intermédiaire, et la taille moyenne de pore de la première couche intermédiaire allant de 110 à 170 nm, dans lequel
   les couches sont formées par application consécutive d'une suspension comprenant des particules d'au moins un composé de céramique de tailles différentes sur une structure de support en céramique, ce qui évite un procédé sol-gel, le procédé pour chaque couche comprenant les étapes consistant à

   a) fournir une suspension de revêtement comprenant des particules d'au moins un composé de céramique ;
   b) mettre en contact la surface de la structure de support en céramique avec une suspension de revêtement pendant une certaine durée ;
   c) retirer la suspension de revêtement excédentaire sans retirer de film résiduel de suspension de revêtement sur la surface ;
   d) sécher le film résiduel ; et
   e) fritter le corps en couches ;

   dans lequel la suspension de particules céramiques pour le revêtement est préparée à partir de poudres cristallines de particules d'au moins un composé de céramique et d'un solvant en présence d'un additif de dispersion pour former une suspension de revêtement,
   dans lequel la taille des particules est réduite avec chaque couche intermédiaire consécutive ; la couche de membrane comprend les plus petites particules résultant en la plus petite taille moyenne de pore, et
   dans lequel les particules des différentes couches sont choisies en ce que la taille moyenne de pore de la couche intermédiaire suivante est plus petite que la taille moyenne de pore de la couche précédente,
   dans lequel les tailles moyennes de pore des couches de support et intermédiaire sont déterminées par porométrie à flux capillaire, la taille moyenne de pore de la couche de membrane étant mesurée comme indiqué dans la description, et dans lequel $D_{10}$ et $D_{90}$ sont des valeurs $D_{10}$ et $D_{90}$ numériques déterminées par diffusion dynamique de lumière.

2. Élément de filtration en céramique multicouche selon la revendication 1, dans lequel le composé de céramique, au moins au nombre d'un, de la couche intermédiaire, au moins au nombre d'une, est choisi dans le groupe constitué par $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AlN, WC, $B_4C$, TiN, et mélanges de ceux-ci, choisi de préférence dans le groupe constitué par $Al_2O_3$, $SiO_2$, $TiO_2$, $ZrO_2$, SiC, $Si_3N_4$, AlN, TiN, et mélanges de ceux-ci, plus préférablement dans lequel le composé de céramique, au moins au nombre d'un, est $Al_2O_3$, $TiO_2$ ou $ZrO_2$, SiC, TiN, ou un mélange de ceux-ci, le plus préférablement dans lequel le composé de céramique, au moins au nombre d'un, est SiC ou $Al_2O_3$.

3. Élément de filtration en céramique multicouche selon l'une quelconque des revendications 1 ou 2, dans lequel la couche intermédiaire, au moins au nombre d'une, comprend des particules avec une taille de particules de $D_{10}$ dans la plage allant de 100 à 180 nm, et de préférence $D_{90}$ dans la plage allant de 200 à 500 nm, encore plus préféré allant de 250 à 400 nm.

**4.** Élément de filtration en céramique multicouche selon la revendication 1, dans lequel le composé de céramique, au moins au nombre d'un, de la deuxième couche intermédiaire est choisi dans le groupe constitué par $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AIN, WC, $B_4C$, TiN, et mélanges de ceux-ci, choisi de préférence parmi $Al_2O_3$, $SiO_2$, $TiO_2$, $ZrO_2$, SiC, $Si_3N_4$, AIN, TiN, et mélanges de ceux-ci, encore plus préféré dans lequel le composé de céramique, au moins au nombre d'un, est $Al_2O_3$, $TiO_2$ ou $ZrO_2$, SiC, TiN, ou un mélange de ceux-ci, le plus préférablement dans lequel le composé de céramique, au moins au nombre d'un, est SiC ou $Al_2O_3$.

**5.** Élément de filtration en céramique multicouche selon les revendications 1 ou 4, dans lequel la deuxième couche intermédiaire comprend des particules avec un rapport Z $D_{90}/D_{10}$ allant jusqu'à 3, de préférence dans lequel la taille de particules $D_{10}$ est dans la plage allant de 50 à 170 nm, de préférence allant de 80 à 120 nm, et de préférence encore $D_{90}$ est dans la plage allant de 150 à 350 nm, encore plus préféré allant de 180 à 210 nm.

**6.** Élément de filtration en céramique multicouche selon la revendication 1, comprenant au moins trois couches intermédiaires, une première couche intermédiaire étant directement supportée sur la structure de support en céramique, une deuxième couche intermédiaire étant directement supportée sur la première couche intermédiaire, et une troisième couche intermédiaire étant directement supportée sur la deuxième couche intermédiaire, dans lequel le composé de céramique, au moins au nombre d'un, de la troisième couche intermédiaire est choisi dans le groupe constitué par $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AIN, WC, $B_4C$, TiN, et mélanges de ceux-ci, choisi de préférence parmi $Al_2O_3$, $SiO_2$, $TiO_2$, $ZrO_2$, SiC, $Si_3N_4$, AIN, TiN, et mélanges de ceux-ci, encore plus préféré dans lequel le composé de céramique, au moins au nombre d'un, est $Al_2O_3$, $TiO_2$ ou $ZrO_2$, SiC, TiN, ou un mélange de ceux-ci, le plus préférablement dans lequel le composé de céramique, au moins au nombre d'un, est $Al_2O_3$ ou $TiO_2$.

**7.** Élément de filtration en céramique multicouche selon les revendications 1 ou 6, dans lequel la troisième couche intermédiaire comprend des particules avec un rapport Z $D_{90}/D_{10}$ allant jusqu'à 6, de préférence jusqu'à 3, encore plus préféré dans lequel la taille de particules $D_{10}$ est dans la plage allant de 8 à 25 nm, de préférence allant de 12 à 17 nm, et encore plus préféré $D_{90}$ est dans la plage allant de 18 à 50 nm, plus préférablement allant de 25 à 35 nm.

**8.** Élément de filtration en céramique multicouche selon l'une quelconque des revendications précédentes, dans lequel le composé de céramique, au moins au nombre d'un, de la couche de membrane est choisi dans le groupe constitué par $Al_2O_3$, BeO, CaO, $HfO_2$, FeO, $Fe_2O_3$, $La_2O_3$, MgO, $MnO_2$, $SiO_2$, SrO, $ThO_2$, $TiO_2$, $Y_2O_3$, $ZrO_2$, SiC, $Si_3N_4$, BN, AIN, WC, $B_4C$, TiN, et mélanges de ceux-ci, choisi de préférence parmi $Al_2O_3$, $SiO_2$, $TiO_2$, $ZrO_2$, SiC, $Si_3N_4$, AIN, TiN, et mélanges de ceux-ci, encore plus préféré dans lequel le composé de céramique, au moins au nombre d'un, est $Al_2O_3$, $TiO_2$ ou $ZrO_2$, SiC, TiN, ou un mélange de ceux-ci, le plus préférablement dans lequel le composé de céramique, au moins au nombre d'un, est $Al_2O_3$, $TiO_2$ ou $ZrO_2$.

**9.** Élément de filtration en céramique multicouche selon l'une quelconque des revendications précédentes, dans lequel

f) la couche de membrane est constituée de particules de $TiO_2$ avec un rapport Z $D_{90}/D_{10}$ inférieur à 3, de préférence dans lequel la taille de particules $D_{10}$ est dans la plage allant de 5 à 9 nm, et de préférence encore $D_{90}$ est dans la plage allant de 9 à 15 nm ; ou
g) dans lequel la couche de membrane est constituée de particules de $ZrO_2$ avec un rapport Z $D_{90}/D_{10}$ inférieur à 5, de préférence dans lequel la taille de particules $D_{10}$ est dans la plage allant de 1 à 3 nm, et de préférence encore $D_{90}$ est dans la plage allant de 3 à 5 nm.

**10.** Procédé de fabrication d'un élément de filtration en céramique multicouche selon l'une quelconque des revendications précédentes, dans lequel les couches sont formées par application consécutive des suspensions comprenant des particules d'au moins un composé de céramique de différentes tailles sur une structure de support en céramique, ce qui évite un procédé sol-gel.

**11.** Procédé selon la revendication 10, le procédé pour chaque couche comprenant les étapes consistant à

a) fournir une suspension de revêtement comprenant des particules d'au moins un composé de céramique ;
b) mettre en contact la surface de la structure de support en céramique avec une suspension de revêtement pendant une certaine durée, de préférence pendant 10 à 120 secondes, encore plus préféré pendant 20 à 90 s, de préférence encore pendant 30 à 60 s, ou pendant 30 s ou 60 s ;
c) retirer la suspension de revêtement excédentaire sans retirer de film résiduel de suspension de revêtement sur la surface ;

d) sécher le film résiduel ;

e) fritter le corps en couches, de préférence à une température inférieure à 1500 °C, encore plus préféré dans lequel la température est réduite avec chaque étape de frittage suivante ; et

f) répéter facultativement les étapes a) à d) jusqu'à ce que l'épaisseur souhaitée de la couche soit obtenue, de préférence jusqu'à 8 fois.

**12.** Procédé selon l'une quelconque des revendications 10 ou 11, dans lequel au moins trois couches intermédiaires et une couche de membrane sont formées.

**13.** Procédé selon la revendication 10, dans lequel pour deux couches intermédiaires directement adjacentes, la couche à proximité de la structure de support en céramique a une épaisseur supérieure à la couche à proximité de la couche de membrane.

**14.** Procédé selon l'une quelconque des revendications 11 à 13, dans lequel la suspension de revêtement comprend

a) des particules d'au moins un composé de céramique, de préférence en une quantité ≤ 20 % en poids en fonction du poids total de la suspension de revêtement, encore plus préféré en une quantité ≤ 15 % en poids en fonction du poids total de la suspension de revêtement, le plus préférablement en une quantité ≤ 10 % en poids en fonction du poids total de la suspension de revêtement ;

b) un agent de liaison, de préférence un alcool polyvinylique, une polyvinylpyrrolidone, ou une cellulose, ou un mélange de ceux-ci, de préférence encore en une quantité ≤ 5 % en poids en fonction du poids total de la suspension de revêtement, encore plus préféré en une quantité ≤ 2 % en poids en fonction du poids total de la suspension de revêtement, le plus préférablement en une quantité ≤ 1 % en poids en fonction du poids total de la suspension de revêtement ; et

c) un solvant, de préférence de l'eau ou un alcool en C1-6, encore plus préféré de l'eau ou de l'éthanol, plus préférablement de l'eau, le solvant représentant le poids résiduel de la suspension de revêtement.

**15.** Procédé selon l'une quelconque des revendications 11 à 14, dans lequel l'étape de séchage comprend un séchage à l'air pendant au moins 12 h, de préférence pendant au moins 12 h et moins de 48 h.

**16.** Procédé selon l'une quelconque des revendications 11 à 15, dans lequel le frittage est mis en oeuvre à une température allant de plus de 300 °C, de préférence plus de 350 °C, encore plus préféré moins de 1700 °C, de préférence encore moins de 1500 °C, de préférence encore moins de 1400 °C, de préférence encore dans la plage allant de 300 °C à 1700 °C, de préférence encore dans la plage allant de 300 °C à 1500 °C, de préférence encore dans la plage allant de 300 °C à 1500 °C, le plus préférablement dans la plage allant de 300 °C à 1400 °C ou dans la plage allant de 350 °C à 1400 °C.

**17.** Procédé selon l'une quelconque des revendications 11 à 16, dans lequel la température de frittage pour la couche à proximité de la couche de membrane est au moins 100 °C plus basse que la température de frittage de toutes les couches à proximité de la structure de support.

**18.** Procédé selon l'une quelconque des revendications 11 à 17, dans lequel la température de frittage pour la couche de membrane est supérieure à 300 °C et inférieure à 600 °C, de préférence inférieure à 500 °C.

**Fig. 1**

**Fig. 2**

1 µm

**Fig. 3**

10 μm

Fig. 4

**Fig. 5**

**EP 3 984 626 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050172811 A1
- US 2019202707 A1
- JP 2005118771 A
- US 20160096150 A1